# EUROPEAN PATENT SPECIFICATION

(11) **EP 0 354 703 B1**
(45) Date of publication and mention of the grant of the patent: **28.09.1994**
(21) Application number: 89307770.1
(22) Date of filing: 31.07.1989
(51) Int. Cl.: H04M 1/274

(54) **Information processing apparatus**
Informationsverarbeitungseinrichtung
Appareil de traitement de l'information

(30) Priority: 02.08.1988 JP 193299/88; 08.09.1988 JP 223626/88; 13.12.1988 JP 312926/88
(43) Date of publication of application: 14.02.1990
(73) Proprietor: CANON KABUSHIKI KAISHA, Tokyo (JP)
(72) Inventor: Sato, Ryoichiro, Yokohama-shi Kanagawa-ken (JP); Furuya, Yoji, Inagai-shi Tokyo (JP)
(74) Representative: Beresford, Keith Denis Lewis

(56) References cited:
- EP-A- 0 125 877
- DE-A- 3 415 839
- US-A- 4 113 993
- US-A- 4 566 127

## Description

### BACKGROUND OF THE INVENTION:

### (a) Field of the Invention

The present invention relates to an information processing apparatus and, more particularly, to an information processing apparatus having a telephone function or communication function and a character recognition function.

### (b) Related Background Art

In recent years, a multi-functional information processing apparatus having, e.g., a personal computer function and a telephone function or facsimile function has been widely used. In order to input data such as a "company name" and a "telephone number" described on a printed matter, e.g., a name card or pamphlet and to register the data as a data base, a keyboard and a display are used to input the data.

In the above conventional apparatus, however, although an image scanner as a facsimile function can read a printed matter such as a card or pamphlet, data can be input by only a key input operation performed by an operator. Therefore, input errors and the like easily occur and an input time is prolonged to decrease an operation efficiency.

In the above conventional information processing apparatus, customer information such as a "company name" and a "telephone number" registered as a data base are stored in units of indexes in the order of kana syllabary (a, i, u, ..., o, n) or in the alphabetical order. In order to use the above customer information for the facsimile function or telephone function, an index is designated, customer information belonging to the designated index is displayed on a display, and an item to be transmitted is designated from the displayed customer information.

In the above conventional technique, however, since each transmission customer is simply displayed on the display in units of indexes and selected, a transmission customer must be designated for each index. Therefore, when a plurality of transmission customers or transmission customers in different indexes are to be designated, an operation is complicated. In particular, it is difficult to simultaneously designate a plurality of transmission customers in order to perform multi-address transmission.

For this reason, since data for multi-address transmission must be additionally registered, a data processing function of a personal computer has not been sufficiently achieved.

In the above information processing apparatus, an index to which data of a required transmission customer belongs must be known. If an index is not known, indexes must be sequentially called and checked to result in a very cumbersome operation. The data processing function of a personal computer has not been sufficiently achieved also in this point of view.

Reference is made (US-A-4 566 127) to a complex system in which the functions of OCR (optical character reader) and facsimile are combined by a CPU (central processor unit). The complex system oeprates in an OCR-facsimile mode to effect a complex processing of character information and image information as well as a usual OCR mode to effect coding of character information and a usual facsimile mode to effect a communication of character/image information.

Reference is also made (EP-A-0 125 877) to a sheet information input apparatus for an electronic file system which comprises a sheet input device for inputting a sheet image into the apparatus, a sheet judging device responsive to the input device for judging a type of specific code on the inputted sheet, and an information reading device responsive to the judging device for reading information from the sheet.

The present invention has been made to solve the above problems and has as its object to provide an image processing apparatus capable of reading image information and registering information obtained by character recognition as a data base.

It is another object of the present invention to provide an image processing apparatus capable of utilizing transmission customer data registered in a data base more effectively, thereby increasing an operation efficiency in multi-address transmission or the like.

It is still another object of the present invention to provide an information processing apparatus capable of reading image information including telephone number data, performing character recognition for the read image information and storing the image information as a data base, and when the telephone number data included in the image information stored as the data base is searched, performing calling in accordance with the searched telephone number data.

It is still another object of the present invention to provide an information processing apparatus having a search function based on a key word and capable of inputting a key word to select one or a plurality of facsimile transmission customers from a data base in which customer information of a plurality of facsimile transmission customers are registered.

According to the invention there is provided an information processing apparatus adapted for connection to a communication line, comprising reading means for reading image information recorded on a recording medium and recognising means for recognising the image information read by said reading means, characterised by storage means for storing the image information recognised by said recognizing means; storage control means for controlling said storage means to store the recognised image information; searching means for searching the recognised image information stored in said storage means; display control means for controlling a display device to display the recognised image information searched by said searching means; selection means for selecting a desired image from the recognised image information displayed on the display device; and control means adapted for performing communication processing, via said communication line, on the basis of the recognised image information selected by said selection means.

The invention will now be described by way of example with reference to the accompanying drawings in which:
Fig. 1 is a block diagram showing an embodiment of the present invention;
Fig. 2 is a perspective view showing an outer appearance of the embodiment shown in Fig. 1;
Fig. 3 is a view showing a main menu;
Fig. 4 is a view showing a telephone menu;
Figs. 5 to 7 are views showing telephone book menus;
Figs. 8 to 10 are views showing card file menus;
Figs. 11A and 11B are views for explaining a method of inputting a character string in a card data frame;
Figs. 12 to 14 are views showing card file menus;
Fig. 15 is a flow chart for explaining operations corresponding to respective icons;
Figs. 16A and 16B are flow charts for explaining operations of telephone book programs;
Figs. 17A to 17F are flow charts for explaining operations of card file programs;
Fig. 18 is a view for explaining an analyzing direction of each line on a card image in character recognition;
Figs. 19A to 19D are flow charts for explaining in detail parts of the procedures shown in Figs. 17A to. 17F;
Fig. 20 is a flow chart for explaining a transmission operation in a facsimile function;
Fig. 21 is a view showing a relationship between the contents of a telephone book file, a search key word, and a FAX transmission list file;
Fig. 22 is a perspective view showing an outer appearance of a telephone set as a most simple application form of the present invention;
Fig. 23 is a block diagram of the telephone set shown in Fig. 22;
Fig. 24 is a view for explaining a card conveyor unit;
Figs. 25A to 25C are flow charts for explaining operations of the telephone set shown in Fig. 23;
Figs. 26A and 26B are views for explaining card insertion directions;
Figs. 27A and 27B are views for explaining search directions of image data;
Fig. 28 is a plan view of a telephone set as another application form of the present invention;
Fig. 29 is a block diagram of the telephone set shown in Fig. 28;
Figs. 30A and 30B are flow charts for explaining operations of the telephone set shown in Fig. 28;
Figs. 31A and 31B are flow charts for explaining a part of the procedure shown in Fig. 30(a); and
Fig. 32 is a view showing a matrix pattern on the upper surface of the telephone set shown in Fig. 28.

### DETAILED DESCRIPTION OF THE PREFERRED EMBODIMENTS:

A preferred embodiment of the present invention will be described below with reference to the accompanying drawings.

### <Description of Apparatus>

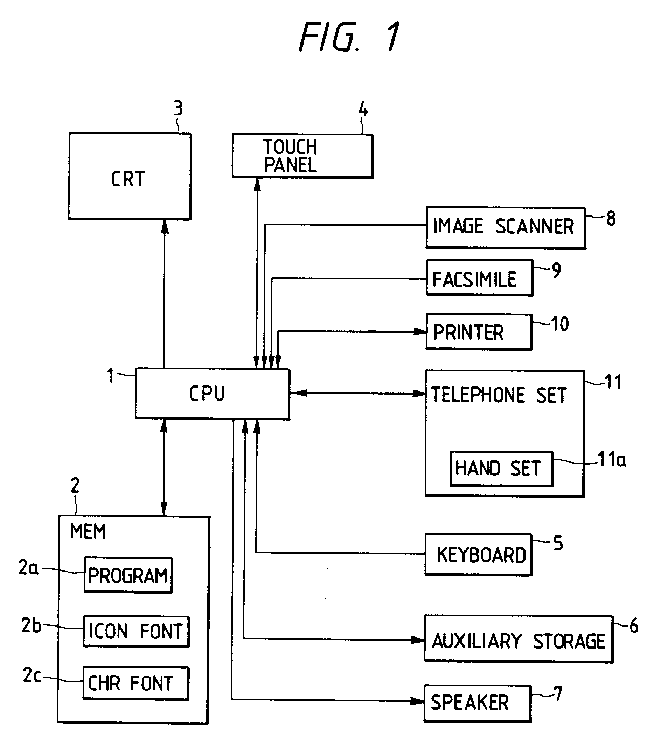

Fig. 1 is a block diagram showing an apparatus according to the present invention. Referring to Fig. 1, a central processing unit (to be referred to as a CPU hereinafter) 1 controls the overall apparatus, and a memory 2 includes control programs 2a, a display icon font 2b, and a character font 2c. A touch panel 4 covers a display surface of a CRT display 3. When a user activates an icon displayed on the CRT display 3, an instruction is input to the apparatus. The CPU 1 is connected to a keyboard 5 for key input, an auxiliary storage 6 for storing the programs 2a or a large amount of data (document data or the like to be transmitted by a facsimile function), a speaker 7 for alarming a user of key input or occurrence of an error by a sound, an image scanner 8 for reading a card image, a facsimile 9, a printer 10 for printing, and a telephone set 11 including a processing device (not shown) for a telephone line and a handset 11a.

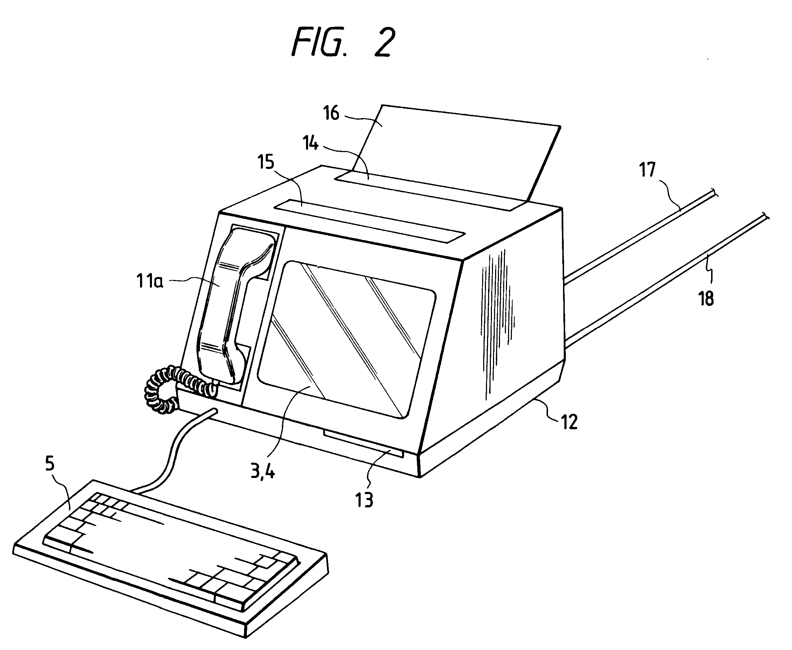

Fig. 2 is a perspective view showing an outer appearance of the apparatus according to this embodiment. Referring to Fig. 2, the touch panel 4 covers the CRT display 3 as described above. An overall apparatus 12 includes a floppy disk insertion port 13 constituting a part of the auxiliary storage 6, a card inlet 14, a card outlet 15, a card guide 16, a telephone line 17, and a power source 18.

Note that the ports 14 and 15 and the guide 16 have a size suitable for any sheet used in reading of the facsimile, printing of the printer, or the like.

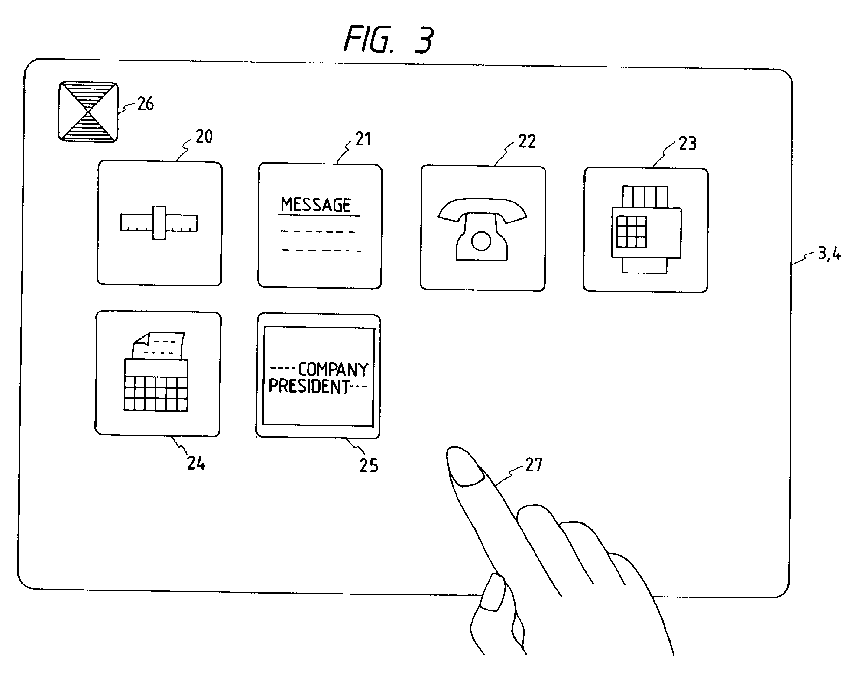

Fig. 3 shows a main menu displayed on the CRT display 3 immediately after a power switch of the apparatus 12 is turned on. When a user activates a portion on the touch panel 4 located in front of the screen by a finger 27, a program indicated by the touched icon is activated. Referring to Fig. 3, an icon 20 is for an "environment" program for adjusting a speaker volume, screen brightness, and the like of the apparatus 12, an icon 21 is for a "message" program for leaving a message in the apparatus 12, an icon 22 is for a "telephone" program for setting a telephone menu, an icon 23 is for a "fax" program for setting a fax menu, an icon 24 is for a "wordprocessor" program, an icon 25 is for a "card file" program for managing cards, and an "end" icon 26 is for performing an end operation. The auxiliary storage 6 stores a number of various programs in addition to the above programs. When a user aligns icons for programs to be activated on the main menu screen, the programs can be registered.

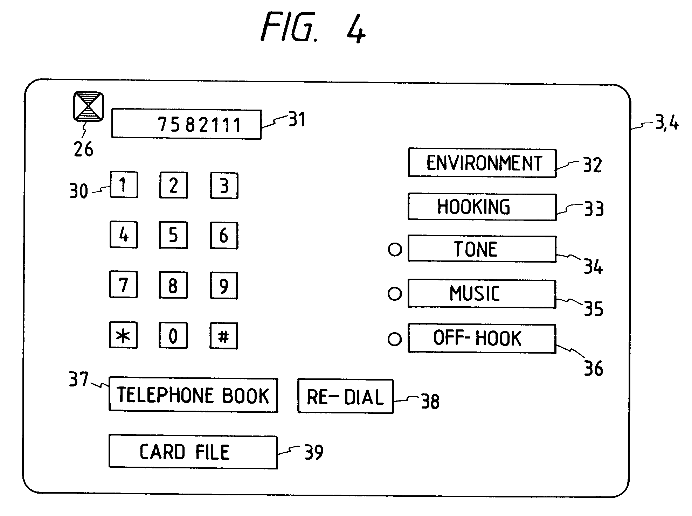

Fig. 4 shows the telephone menu displayed when the "telephone" icon 22 on the main menu screen is activated by a user. The telephone menu includes push buttons 30, a display column 31 for displaying a number input from the push buttons 30, an "environment" program activating button 32 for setting a telephone number, a music, and the like of the apparatus 12, a hooking button 33, a tone switching button 34 for sending tones of the push buttons to a customer, a music start/end button 35, an off hook button 36 for setting an off hook state without picking up the handset, a telephone book button 37 for searching a telephone number from "telephone book" data, a re-dial button 38 for calling a customer of the same telephone number if the customer is busy, a card file button 39 for searching a telephone number from "card file" data, and an "end" button 26 for performing an end operation of the telephone program.

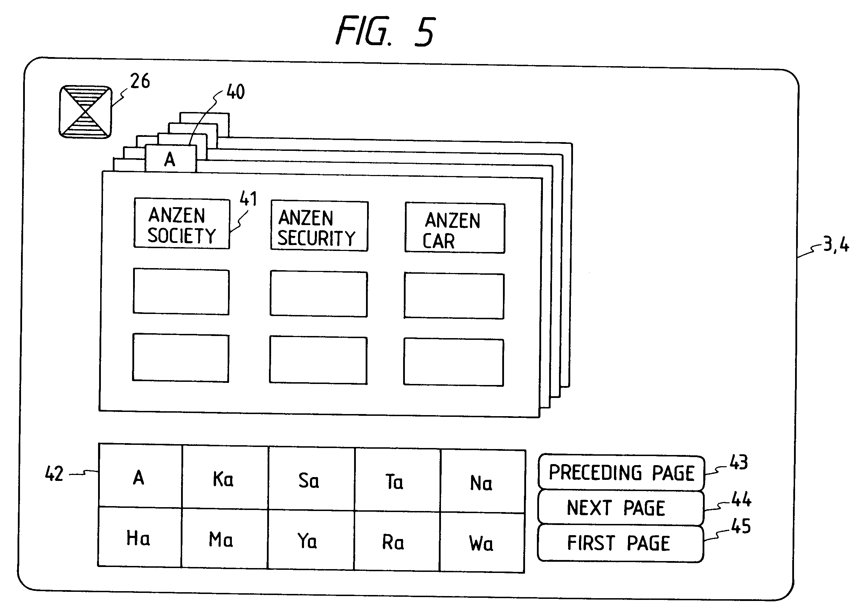

Fig. 5 shows a telephone book menu displayed when a user activates the telephone book button 37 shown in Fig. 4. As shown in Fig. 5, the telephone book menu includes an index 40 and a customer (name) 41. When a user activates the customer 41, a phone call is automatically made. The telephone book menu also includes index buttons 42, a next page button 44 for displaying a next page when a plurality of customer data of the same index are present, and a preceding page button 43 for displaying a preceding page. A first page button 45 is for returning to a menu first displayed when the telephone book button 37 is activated.

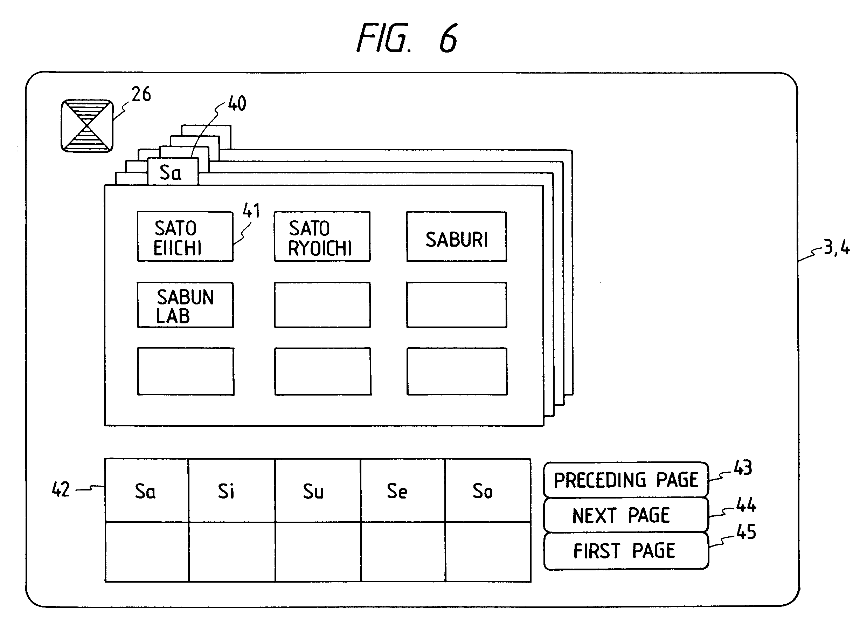

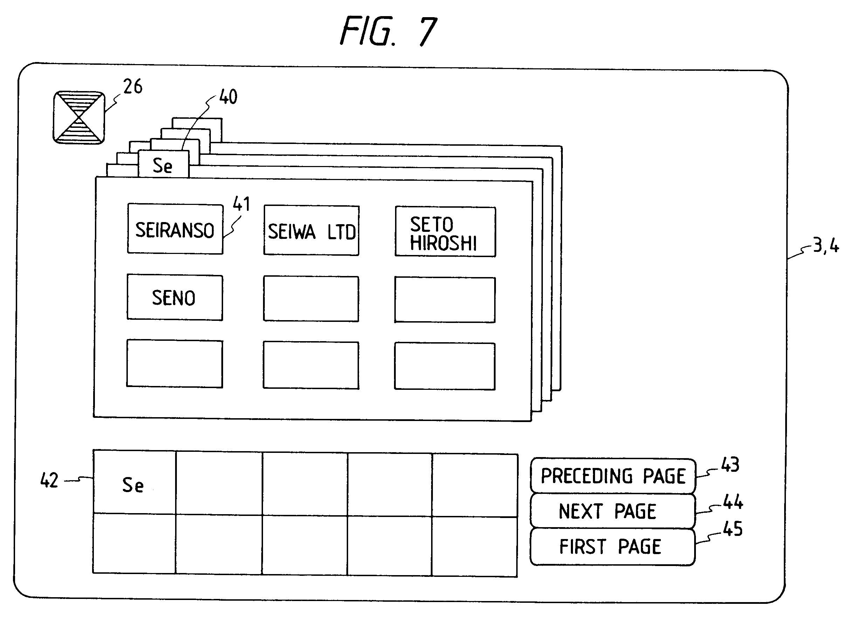

Figs. 6 and 7 show menus displayed when a user activates "Sa" and "Se" of the index buttons 42 shown in Fig. 5, respectively.

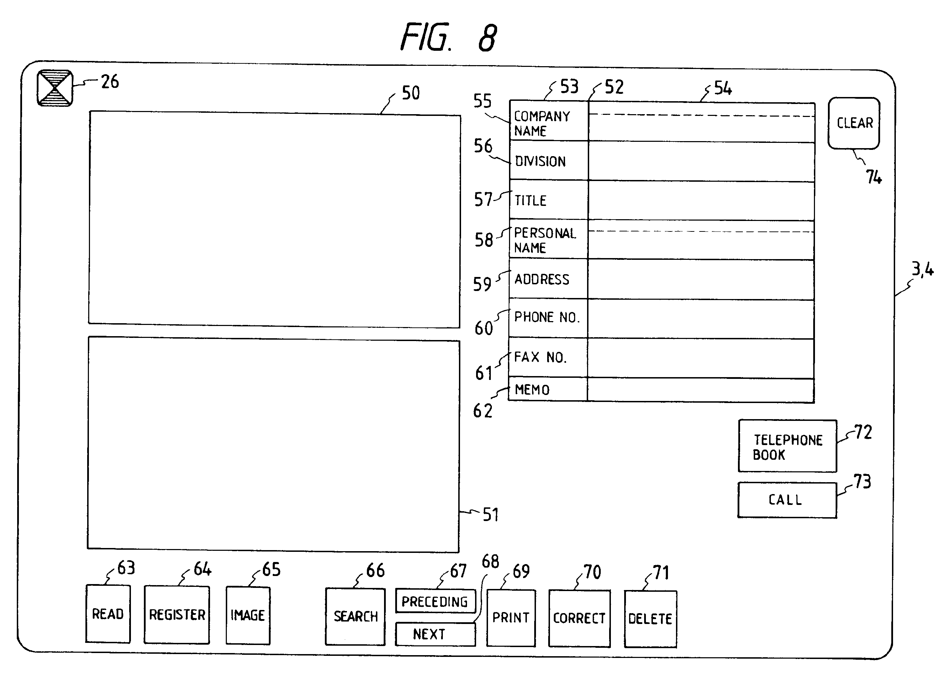

Fig. 8 is a menu displayed when a user activates the card file button 39 shown in Fig. 4 or the "card file" icon 25 of the main menu shown in Fig. 3.

Referring to Fig. 8, the menu includes a frame 50 for displaying an image of a card read by the image scanner 8, a frame 51 for displaying characters obtained by analyzing the card image 50 by a pattern matching method of character recognition, and a frame 52 for registering data of a card displayed in the frame 51 as a data base in units of types. A section 53 indicates examples of items of card data, and a section 54 indicates examples of raw data of a card. These sections have columns of a company name 55, a division 56, a title 57, a personal name 58, an address 59, a phone number 60, a fax number 61, and a memo 62.

The card data frame 52 is also used for data search. Buttons 63 to 74 indicate function menus for various processing tasks. A read button 63 is for performing automatic processing tasks such as reading of a card image into the image frame 50 performed by the image scanner 8, character recognition, determination of a type, and writing in the card data frame 52. A register button 64 is for newly registering data read in the card data frame 52 into a "card file". An image button 65 is for newly registering data similar to the register button 64 and for additionally registering a card image. When a user inputs characters in a part of the card data frame 52 and activates a search button 66, data coincident with the characters is searched from the "card file", and a search result is displayed in the card data frame 52 in units of cases. A next page button 68 is for displaying a next case, and a preceding page button 67 is for displaying a preceding case. A print button 69 is for printing all of searched data. A correct button 70 is for partially correcting a displayed case of data after searching and re-registering the data in the "card file". A delete button 71 is for deleting a displayed case of data after searching from the "card file". A telephone book button 72 is for registering a telephone number or fax number in the card data frame 52 into "telephone book" data. A call button 73 is for performing automatic calling by a telephone number in the card data frame 52. This internal operation is similar to automatic calling using the telephone book shown in Figs. 5, 6, and 7. A clear button 74 is for clearing all of unnecessary data on the screen. A user clears data by this button, inputs characters in a part of card data, and activates the search button 66, thereby searching data coincident with the input characters from the "card file".

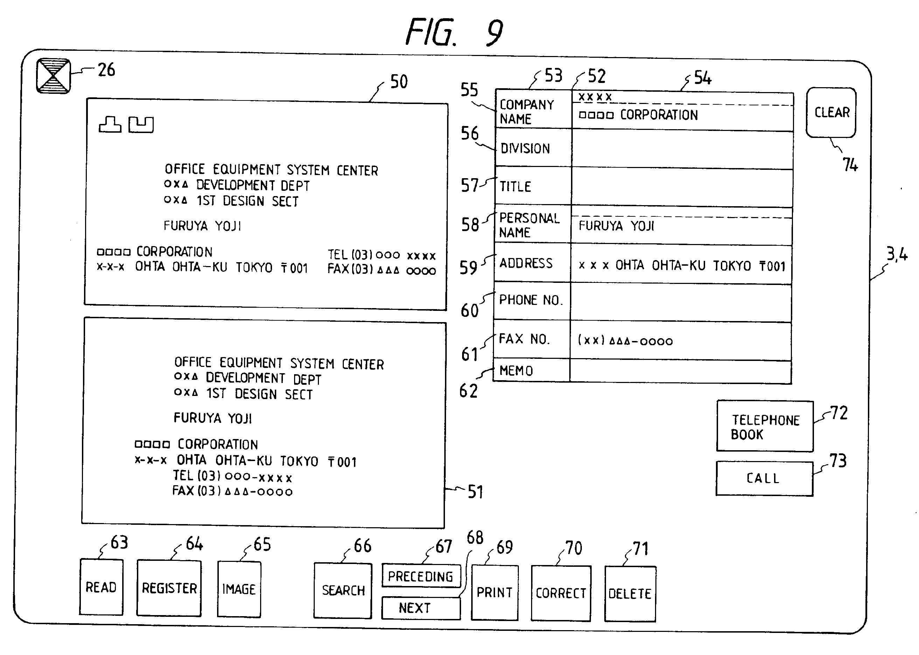

Fig. 9 shows a state in which a user sets a card at the card inlet 14 from the state shown in Fig. 8 described above and activates the card read button 63 and card reading processing is completed. A card image read from the image scanner 8 is displayed in the image frame 50, character recognition is performed on the basis of the image, and the recognition result is displayed in the frame 51. Only card data whose types are determined in the frame 51 are set in the card data frame 52. Note that if the company name begins with katakanas (hiraganas), the kana part is automatically set in a column for data indicating how to read. A logo mark of the company name of the card image 50 is not displayed in the character recognition result frame 51 because it is not recognized as a character.

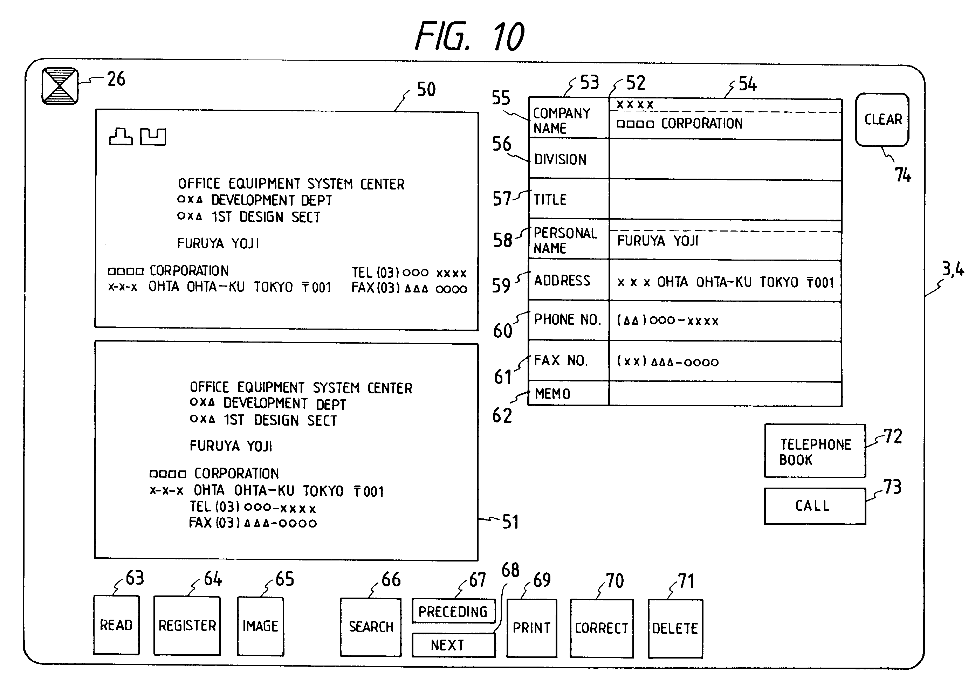

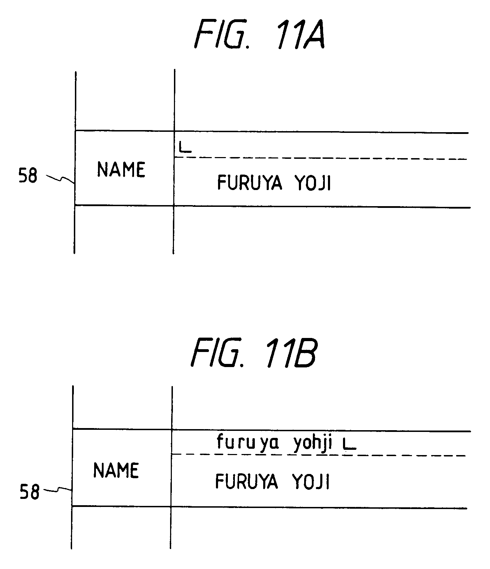

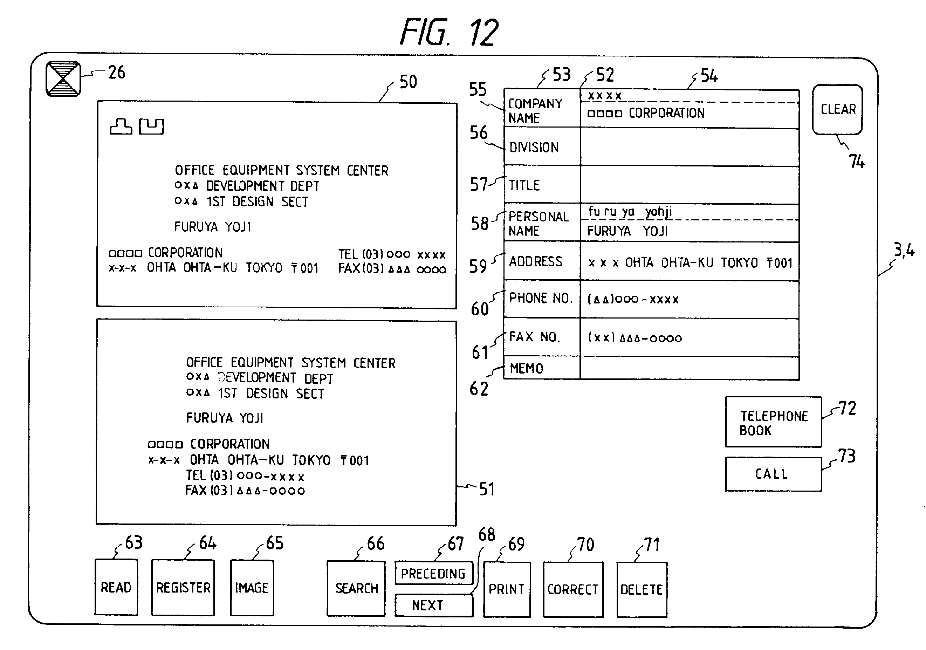

Fig. 10 shows a state in which a user activates a telephone character line "(03)-ooo-xxxx" in the character recognition result frame 51 and immediately activates the type frame of the phone number column 60 which is blank in Fig. 9 in the card data frame, thereby automatically setting the telephone number in the phone number column 60. Fig. 11A shows a state in which a user causes a character cursor to appear in the column of data indicating how to read which is blank in Fig. 10 of the personal name column 58, and Fig. 11B shows a state in which the user inputs data indicating how to read from the keyboard 5. Fig. 12 shows a state in which the user activates a return key after the operations shown in Figs. 11A and 11B, thereby completing input of the data indicating how to read in the personal name column 58.

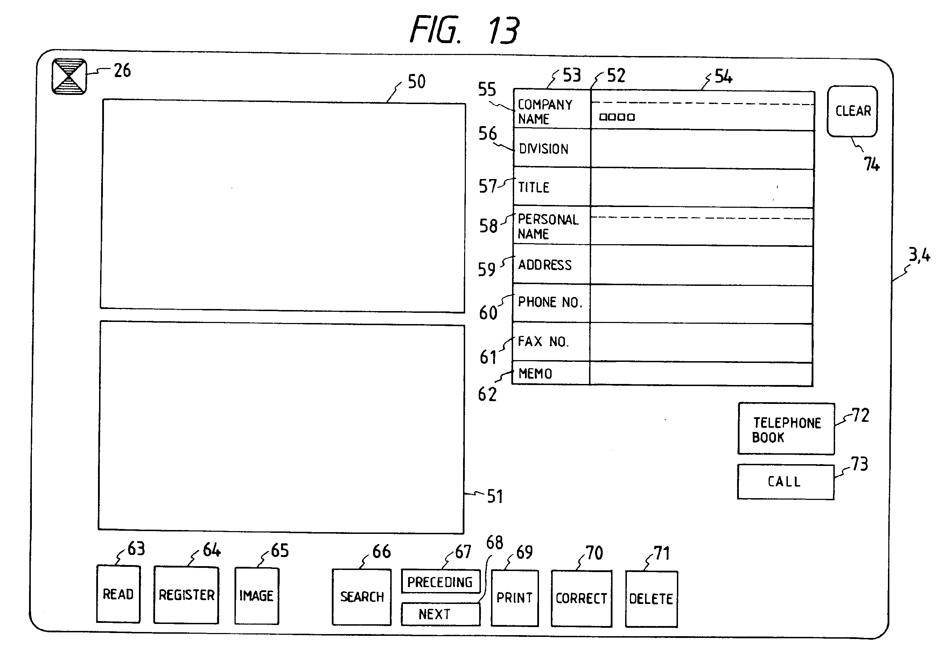

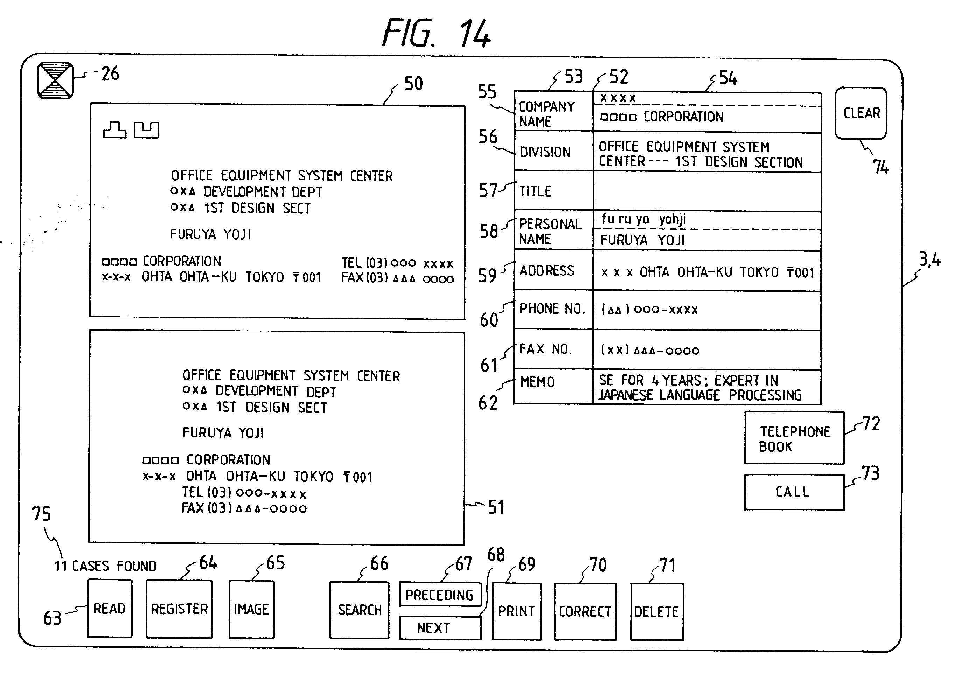

Fig. 13 shows a state in which a user inputs search characters "□□□□ Corporation" in the company name column 55 immediately before activating the search button 66. Note that the search characters can be input by a method similar to that shown in Figs. 11A and 11B, i.e., can be input by the cursor. Fig. 14 shows a state of a menu obtained by activating the search button from the state shown in Fig. 13. A message 75 indicates that 11 cases of card data whose company names coincide with the "□□□□ Corporation" have been found from the "card file" data. Data of the first case is displayed from the company name column 55 to the memo column 62 in the card data frame 52. This data is registered with an image, and a card image is developed in the image frame 50. If a user wants to see all of the 11 data, he or she need only repeatedly activate the next page button 68 to sequentially display the card data in the frame 52.

### <Description of Operation>

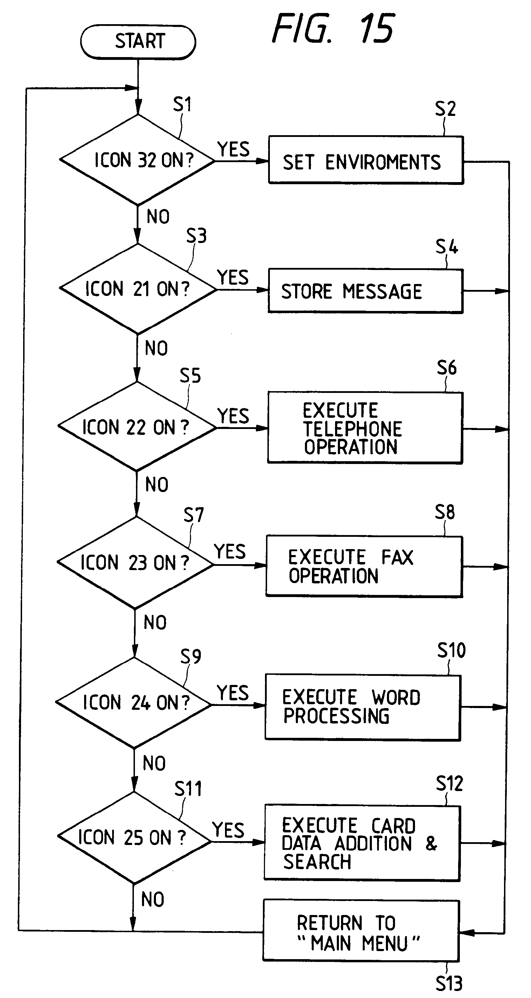

Operations of the apparatus according to this embodiment will be described below with reference to flow charts shown in Figs. 15 to 17F.

Note that programs of this embodiment are started when the apparatus 12 is connected to the power source 18, and the main menu shown in Fig. 3 is displayed on the CRT display 3.

In step S1 shown in Fig. 15, whether a user activates the "environment" icon is checked. If the "environment" icon is activated, in step S2, the environment menu is displayed to perform processing for setting environments such as a speaker volume or screen brightness by an input operation by the user. If the end button 26 is activated, the flow advances to step S13, and the screen is returned to the main menu. That is, the flow returns to the start of this program.

Similarly, whether the other icons are activated are checked in steps S3, S5, S7, S9, and S11. If any icon is activated, a program corresponding to the activated icon is activated to execute corresponding processing in step S4, S6, S8, S10, or S12. For example, if the "message" icon is activated, the message menu is displayed in step S4 to execute "message" processing for storing a message in the apparatus 12. If the "telephone" icon is activated, the "telephone" menu is displayed in step S6 to execute a telephone operation by the user. If the "fax" icon is activated, the "fax" menu is displayed in step S8 to execute a fax operation by the user. If the "wordprocessor" icon is activated, the wordprocessor menu is displayed in step S10 to execute word processing by the user. If the "card file" icon is activated, the "card file" menu is displayed in step S12 to execute card data addition and search by the user.

The auxiliary storage 6 stores a number of various programs in addition to the above programs. Therefore, the user can align program icons on the main menu and add them as programs which can be immediately activated. In the flow chart of Fig. 15, programs are similarly added after steps S11 and S12.

The "wordprocessor" program in step S10 of Fig. 15 includes a function of directly facsimile-transmitting a processed document in addition to a function of printing it on paper as an output.

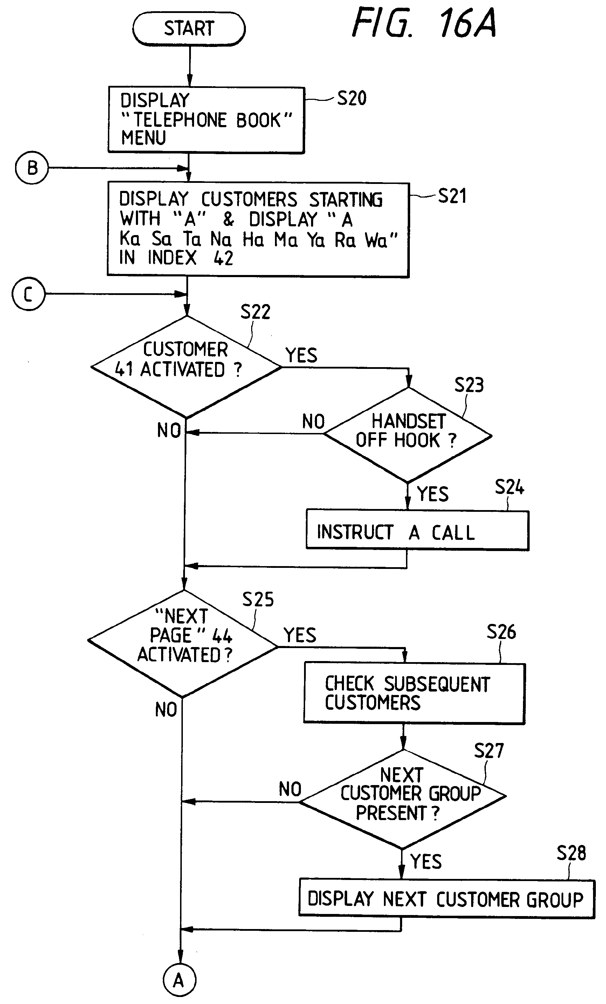

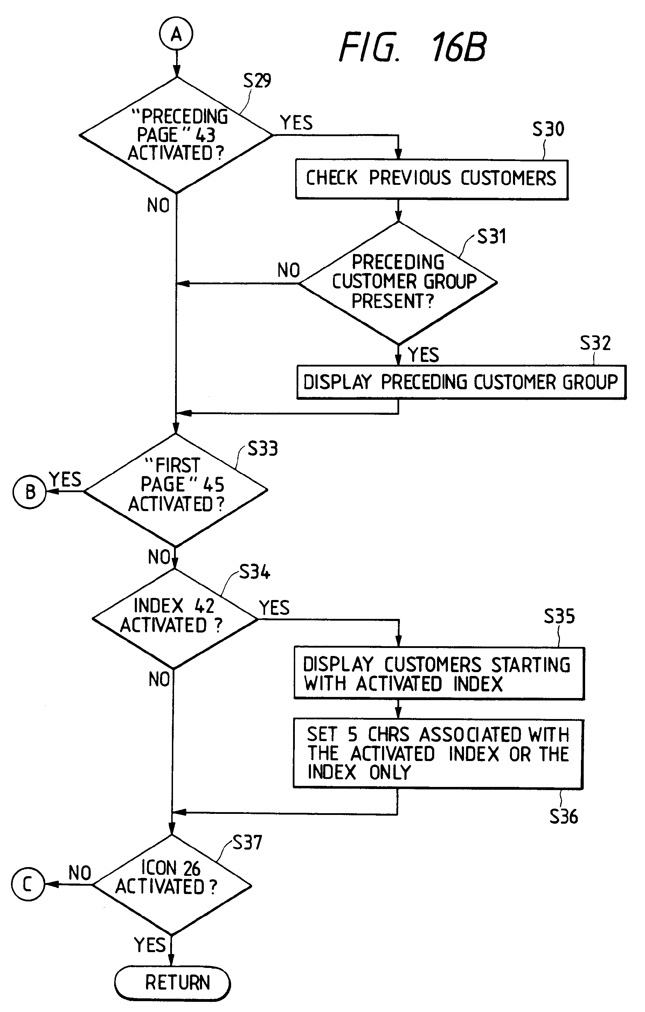

Figs. 16A and 16B are flow charts for explaining programs corresponding to the "telephone book" icon described with reference to Figs. 5 to 7.

In step S20, the "telephone book" menu is displayed. In step S21, "A" is set as the index 40, and customers 41 starting with "A" are displayed. At the same time, "A, Ka, Sa, Ta, Na, Ha, Ma, Ya, Ra, and Wa" is set in the index buttons 42. In step S22, whether the user activates the customer 41 is checked. If the customer 41 is activated, the flow advances to step S23, and whether the handset 11a is off-hooked is checked. If the handset 11a is off-hooked, the telephone set 11 is instructed to make a call by using a telephone number recorded in the customer 41 in step S24, and the flow advances to step S25. If "NO"s are determined in steps S22 and S23, the flow advances to step S25, and whether the user activates the next page button 44 is checked. If "YES" in step S25, the flow advances to step S26, and whether a large number of customers 41 are currently present and subsequent customers 41 not displayed yet are present is checked. If it is determined in step S27 that a next customer group is present, the next customer group is displayed in the customer 41 in step S28. After this display, if "NO" is determined in step S25 or S27, the flow advances to step S29, and whether the user activates the preceding page button 43 is checked. If the preceding page button 43 is activated, whether a large number of customers 41 of the current index 40 are present and previous customers 41 not displayed yet are present is checked in step S30. If it is determined in step S31 that a preceding customer group is present, the preceding customer 41 group is displayed in step S32. After this display, if "NO"s are displayed in steps S29 and S31, the flow advances to step S33, and whether the user activates the first page button 45 is checked. If the first page button 45 is activated, processing from step S21 is repeated. If the first page button 45 is not activated, the flow advances to step S34, and whether the user activates the index button 42 is checked. If the index button 42 is activated, a reading of the activated index button 42 is set in the index 40 and customers 41 starting with the index 40 are displayed in step S35. In step S36, the index buttons 42 are updated. That is, if the index 40 is any of "A, K, S, T, N, H, M, Y, R, and W", five characters associated with the activated index are set in the index buttons 42. For example, if "S" is the index 40, "Sa, Si, Su, Se, and So" are set in the index buttons 42. If the index 40 is other than "A, K, S, T, N, H, M, Y, R, and W", only the index 40 is set in the index button 42. For example, if "Se" is the index 40, only "Se" is set in the index button 42. After this processing, if "NO" is determined in step S34, the flow advances to step S37, and whether the user activates the end button 26 is checked. If the end button 26 is activated, the "telephone book" program is ended. If the end button 26 is not activated, the flow returns to step S22, and the program processing is repeated from step S22.

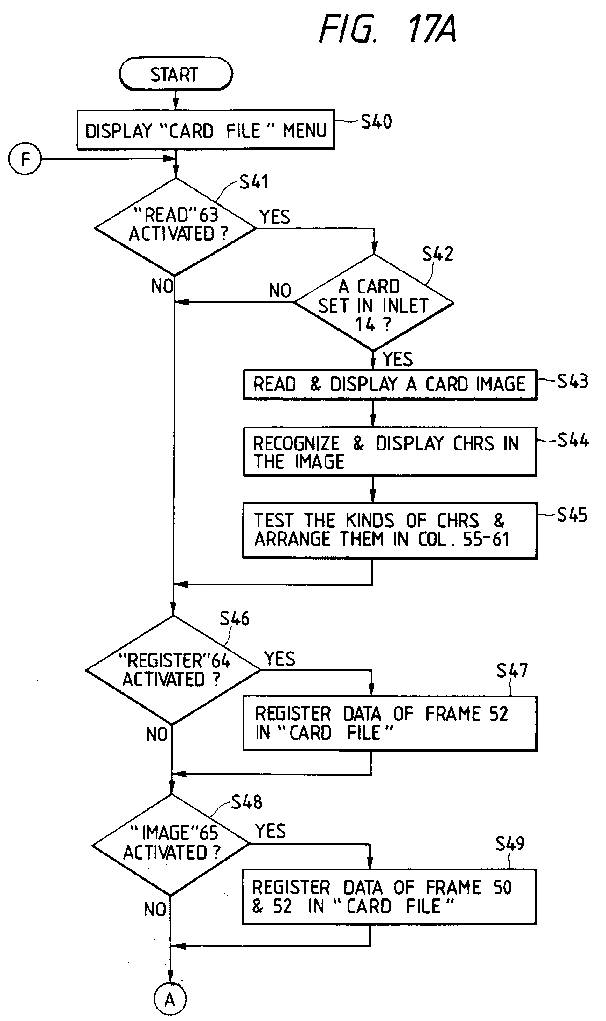

An operation of the "card file" program schematically described above with reference to Figs. 8 to 14 will be described below with reference to flow charts in Figs. 17A to 17F.

In step S40, the "card file" menu shown in Fig. 8 is displayed. In step S41, whether the user activates the card read button 63 is checked. If the card read button 63 is activated, whether a card is set at the card inlet 14 is checked in step S42. If the card is set, the flow advances to step S43. In step S43, an image of the card is read by the image scanner 8 and displayed in the card image frame 50. In step S44, a character recognition program based on pattern matching is activated for the card image 50, and recognized characters are displayed in the character recognition result frame 51.

Note that the character recognition method based on pattern matching is widely known through a large number of literatures and a detailed description thereof will be omitted.

In step S45, the characters (a company name, a division, a title, a personal name, an address, a phone number, and a fax number) in the character recognition result frame 41 are checked in units of lines, and only determined characters are set in the columns 55 to 61 in the card data frame 52. After this processing or if "NO"s are determined in steps S41 and S42, the flow advances to step S46, and whether the user activates the register button 64 is checked. If the register button 64 is activated, a data group set in the card data frame 52 is newly registered in the "card file" as data of one card. If "NO" is determined in step S46, the flow advances to step S48, and whether the user activates the image register button 65 is checked. If the image register button 65 is activated, the data group set in the card data frame 52 and the card image 50 are newly registered in the "card file" as data of one card image in step S49, and the flow advances to step S50. If "NO" is determined in step S48, whether the user activates one of the character lines in the character recognition result frame 51 is checked in step S50. If a line is activated, a tone of the activated line is inverted. If the activated character line is already inverted, however, the line is returned to a standard tone. After this processing or if "NO" is determined in step S50, the flow advances to step S52, and whether the user activates any of the items 53 in the data frame 52 is checked. If any of the items 53 is activated, whether an inverted character line is present in the character recognition frame 51 is checked in step S53. If an inverted character line is present, the inverted line is copied in the activated item 53 of the card data frame 52 in step S54. In step S55, the inverted tone in the character recognition frame 51 is returned to the standard tone, and the flow advances to step S57.

If "NO" is determined in step S53, a tone of the item 53 activated by the user is inverted, and the flow advances to step S57. If "NO" is determined in step S52, whether the user activates any of the data lines 54 in the card data frame 52 is checked in step S57. If any of the data lines 54 is activated, a character cursor is displayed at the head of the activated line in step S58. In step S59, the user performs addition and correction of the card data by using the keyboard 5, and the processing in step S59 is continued until a return key is activated. If the return key is activated, the flow advances from step S60 to S61, and a character cursor is erased from the card data frame 52. If "NO" is determined in step S57, whether the user activates the clear button 74 is checked in step S62. If the clear button 74 is activated, all the data in the card image frame 50, the character recognition result frame 51, and the card data frame 52 are cleared in step S63. If "NO" is determined in step S62, the flow advances to step S64, and whether the user activates the search button 66 is checked. If the search button 66 is not activated, the flow advances to step S68. If the search button 66 is activated, data in the "card file" coincident with characters set in a part of the card data frame 52 is searched. In this case, if the user activates the search button 66 without setting characters in the card data frame 52, it is assumed that the user instructs searching/displaying of all data. In step S66, the number of searched cases is displayed in the message 75. In step S67, the first case of the searched data is displayed in the card data frame 52.

If "NO" is determined in step S64, whether the user activates the next page button 68 is checked in step S68. If the next page button 68 is not pushed, the flow advances to step S70. If the next page button 68 is activated, however, next data is displayed in step S69 if a large number of searched data are present and subsequent data is present after the currently displayed data, and the flow advances to step S70. In step S70, whether the user activates the preceding page button 67 is checked. If the preceding page button 67 is activated, preceding data is displayed in step S71 if a large number of searched data are present and data already displayed is present preceding to the currently displayed data. If "NO" is determined in step S70, however, whether the user activates the print button 69 is checked in step S72. If the print button 69 is activated, all of the searched data are printed out in step S73. In step S74, whether the user activates the correct button 70 is checked. If the correct button is activated, the flow advances to step S75, and whether the user corrects a part of the card data currently being searched and displayed is checked. If the card data is corrected, the corrected card data is registered in the "card file" in step S76. In this processing, the corrected data is overwritten on old data. If "NO"s are determined in steps S74 and S75, whether the user activates the delete button 71 is checked in step S77. If the delete button 71 is activated, one case of the currently searched and displayed card data is deleted from the "card file" in step S78.

If "NO" is determined in step S77, the flow advances to step S79, and whether the user activates the call button 73 is checked. If the call button 73 is activated, whether the handset 11a is off-hooked is checked in step S80. If the handset is off-hooked, the telephone set 11 is instructed to make a call by using the phone number 60 in the card data frame 52 in step S81. If "NO"s are determined in steps S79 and S80, whether the user activates the telephone book button 72 is checked in step S82. If the telephone book button 72 is not activated, the flow advances to step S92. If the telephone book button is activated, whether the company name 55 or the personal name 58 is set (both of the company and personal names 55 and 58 can be set) and the phone number 60 or the fax number 61 is set (both of the phone and fax numbers 60 and 61 can be set) in the card data frame 52 is checked in step S83. If this check is determined no good in step S84, the message 75 representing "data is insufficient" is output in step S85. If the above check is determined good, the flow advances to step S86, and whether a tone of only one of the company and personal names 55 and 58 of the items 53 is inverted and that of only one of the phone and fax numbers 60 and 61 thereof is inverted is checked. This result is checked in step S87. If the result is determined no good, the flow advances to step S88, and the message 75 representing "which is to be registered ?" is output. If the result is determined good, whether the company or personal name 55 or 58 as an objected to be registered in the "telephone book" is accompanied with indication of how to read is checked in step S89. If the indication of how to read is not accompanied, the message 75 representing "indicate how to read" is output in step S90. If the indication of how to read is already accompanied, a data pair of the company or personal name 55 or 58 and the phone or fax name 60 and 61 is registered in the "telephone book" in step S91. For example, a pair of "a company name and a telephone number" is registered as one case in the "telephone book". In step S92, whether the end button 26 is activated is checked in step S92. If the end button 26 is activated, the "card file" program is ended. If the end button 26 is not activated, the flow returns to step S41, and the processing from step S41 is repeatedly executed.

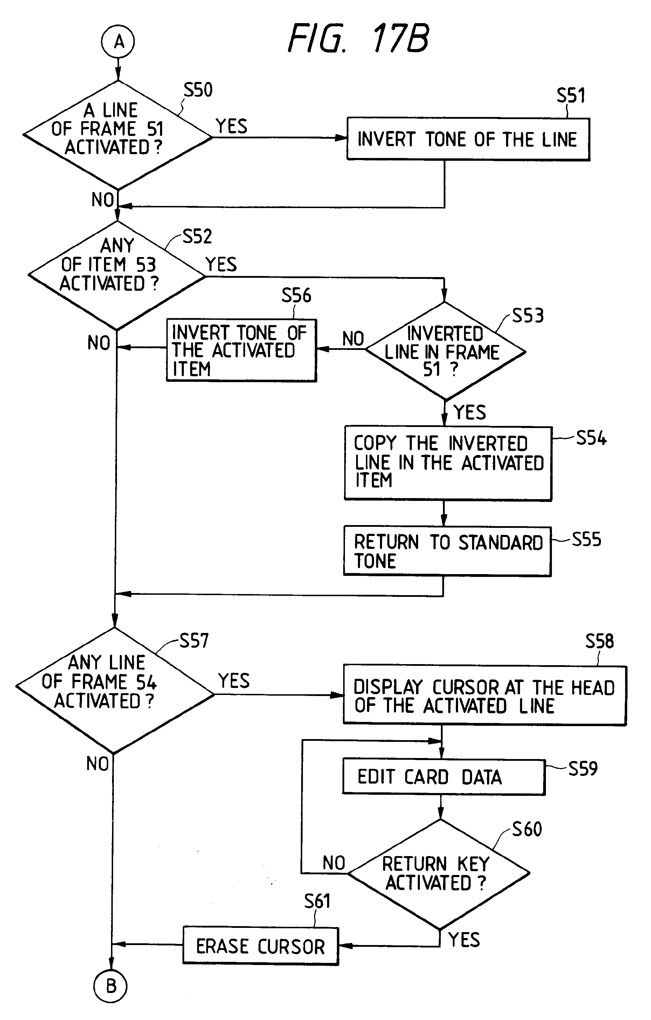

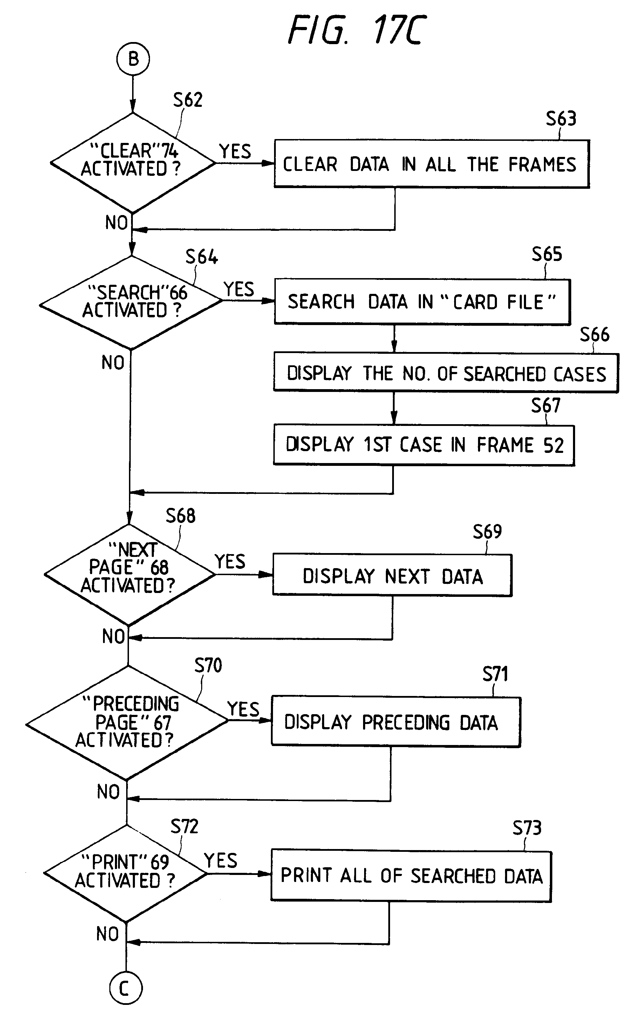

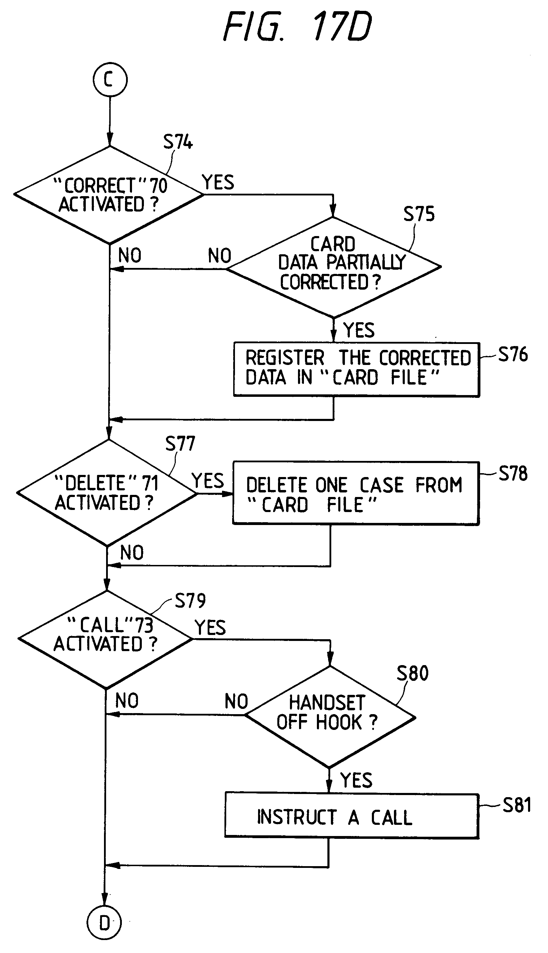

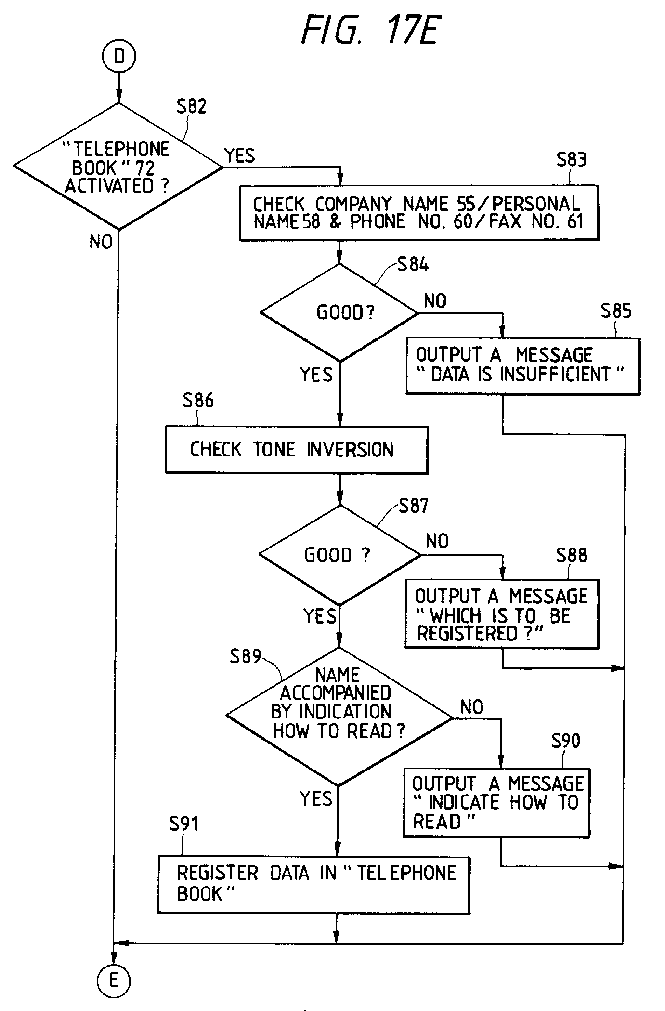

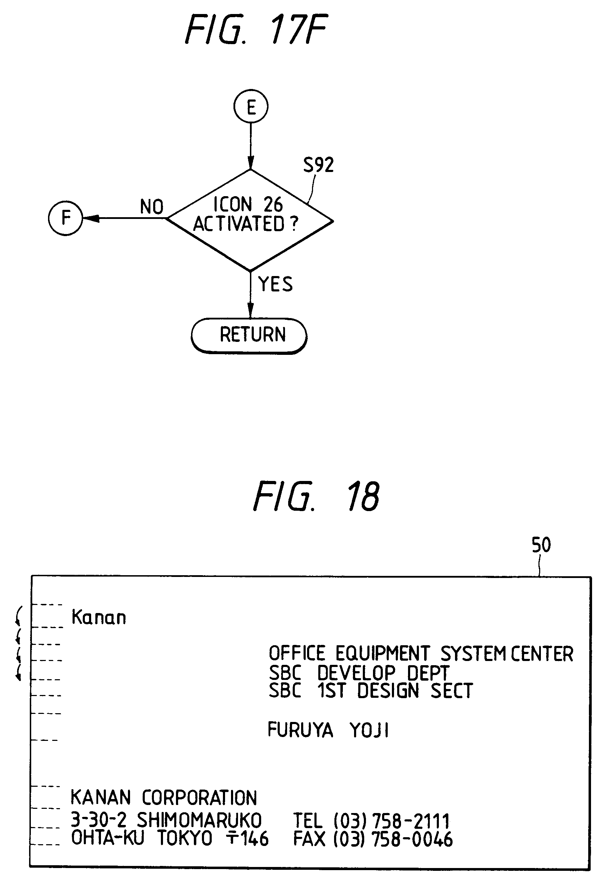

Fig. 18 is a view showing an analyzing direction for each line of the image 50 obtained when the character recognition program based on pattern matching is executed in step S44 of the flow chart shown in Fig. 17.

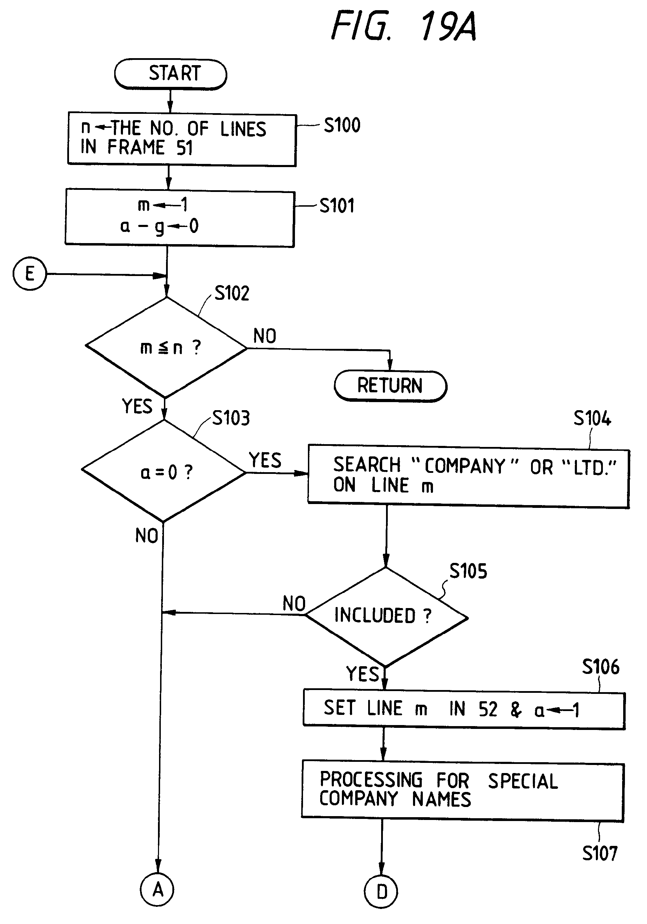

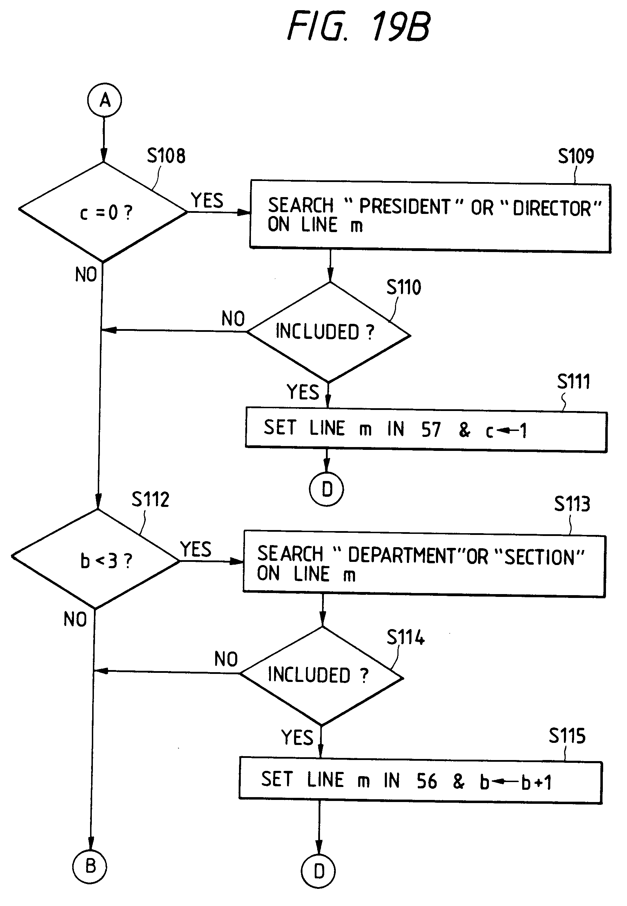

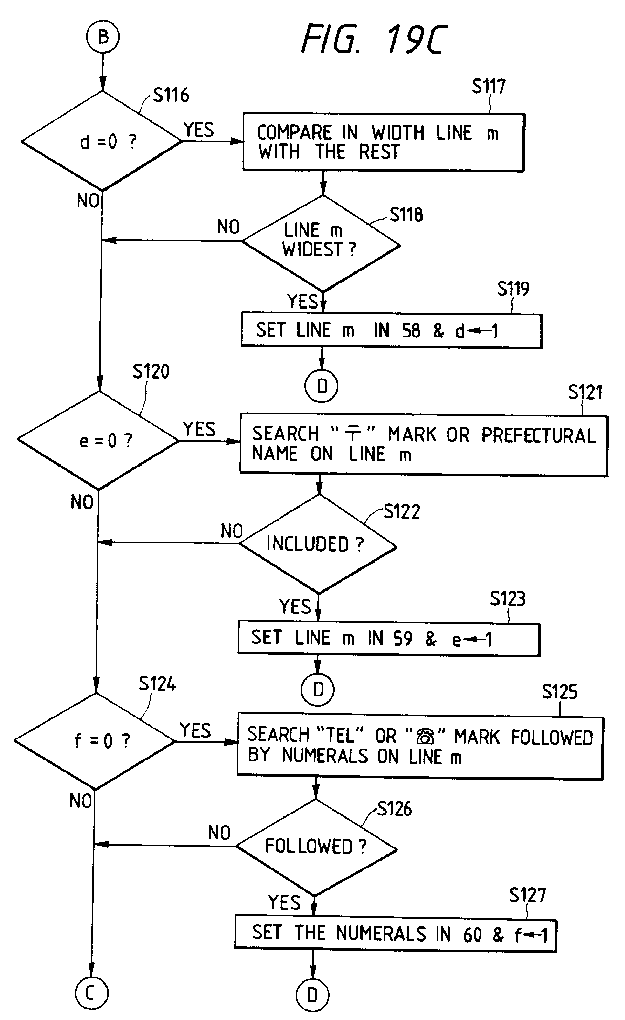

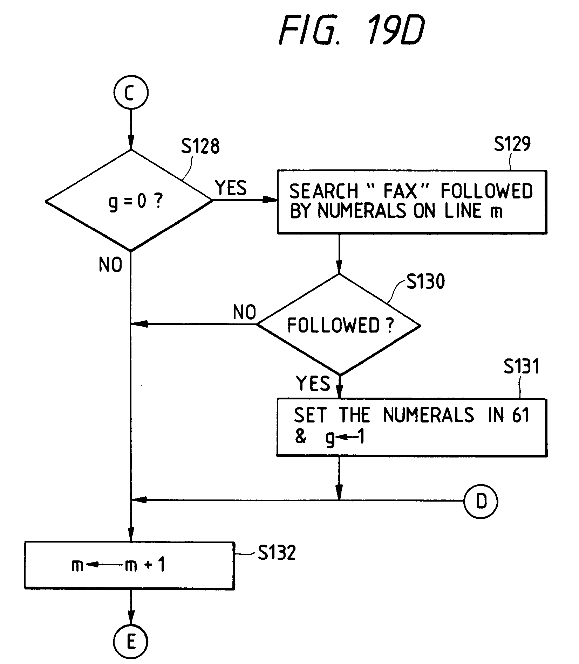

The processing in step S45 of the flow chart shown in Fig. 17 will be described below with reference to a flow chart shown in Fig. 19.

In step S100, the number of character lines in the character recognition result frame 51 is counted to set a variable n. In step S101, various variables are initialized. In this case, "1" is set in m representing the number of currently analyzed lines and "0" is set in a flag a representing a set state of the company name column 52 in the card data frame 52. Similarly, "0"s are set in a flag b for the division column 56, a flag c for the title column 57, a flag d for the personal name column 58, a flag e for the address column 59, a flag f for the phone number column 60, and a flag g for the fax number column 61. In step S102, whether the number of analyzed lines m exceeds the number of lines n is checked. If the number m exceeds the number n, the flow is ended. If the number m does not exceed the number n, the flow advances to step S103, and whether the company name column 55 is set (a = 0) is checked. If the company name column 55 is already set, the flow advances to step S108. If the company name column 55 is not set, whether characters such as "company", "LTD.", "office", or "association" are included on the line m is checked in step S104. If the characters such as "company" are included, this is determined in step S105, and the flow advances to step S106. The line m in the character recognition result frame 51 is set in the company name column 55 of the card data frame 52, and the variable a = 1 is set to record that setting in the company name column 55 is completed.

The flow advances to step S107, and if the company name set in the company name column 55 starts with katakanas or hiraganas, the kana part is automatically set in the frame for data indicating how to read in the company name column 55. The flow advances to step S132, the currently analyzed line variable m is incremented by one, and the flow returns to step S102 of the program, thereby forming a loop for repeating the processing.

If "NO"s are determined in steps S103 and S105, the flow advances to step S108, and whether the title column 57 is set (c = 0) is checked. If the title column 57 is not set, whether characters such as "president", "managing director", "director", "department manager", "section head", "vice-chief", "chief clerk", "manager", "chief", or "section chief" are included on the line m. If it is determined in step S110 that the above characters are included, the line m is set in the title column 57 of the card data frame 52 and the variable c = 1 is set in step S111, and the flow advances to step S132. If "NO"s are determined in steps S108 and S110, whether the division name can be set in the division column 56 (b < 3) is checked in step S112. Note that three division names can be set in this embodiment. This is because a division name printed on a card is often described over about three lines.

If "YES" is determined in step S112, whether characters such as "department", "section", "room", or "charge" are included on the line m is checked in step S113. If the characters are included, the flow advances from step S114 to S115. In step S115, the line m is set in the division column 56 of the card data frame 52, the variable b is incremented by one, and the flow advances to step S132.

If "NO"s are determined in steps S112 and S114, whether the personal name 58 column is set (d = 0) is checked in step S116. If the personal name column 58 is not set, an image line on the card image 50 corresponding to the line m is compared with the rest in step S117. If the line m is widest, the flow advances from step S118 to S119. In step S119, the line m is set in the personal name column 58 of the card data frame 52, d = 1 is set, and the flow advances to step S132. Whether the line m is a personal name line is checked on the basis of the width of an image line because a line of "personal name" is widest on many cards.

If "NO"s are determined in steps S116 and S118, whether the address column 59 is set (e = 0) is checked in step S120. If the address column 59 is not set, whether a 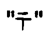 mark or a prefectural name is included on the line m is checked in step S121. If the 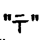 mark or the prefectural name is included, the flow advances from step S122 to S123. In step S123, the line m is set in the address column 59 of the card data frame 52, e = 1 is set, and the flow advances to step S132. If "NO"s are determined in steps S120 and S122, the flow advances to step S124, and whether the phone number column 60 is set (f = 0) is checked. If the phone number column 60 is not set, whether a "telephone", "TEL" or a 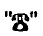 mark followed by numerals is included on the line m is checked in step S125. If followed, the flow advances from step S126 to S127. In step S127, only the numerals on the line m are set in the phone number column 60, and "1" is set in the variable f. The flow then advances to step S132.

If "NO"s are determined in steps S124 and S126, the flow advances to step S128. If the fax number column 61 in the card data frame 52 is not set (g = 0) in step S128, whether characters of "facsimile" or "FAX" followed by numerals are included on the line m is checked in step S129. If followed, the flow advances from step S130 to S131. In step S131, only the numerals on the line m are set in the fax number column 61 of the card data frame 52, and "1" is set in the variable g. The flow advances to step S132, the currently analyzed line variable m is incremented by one, and the flow returns to step S102 of the program, thereby forming a loop.

In this embodiment, a card is laterally placed and character recognition for a laterally written card is performed. However, it is a matter of course that a card can be vertically placed and character recognition and analysis for a vertically written card can be performed. In addition, a card written in English can be analyzed.

In this embodiment, both the telephone book and the card file enable automatic calling of a "telephone number". However, a "facsimile number" can be similarly called in accordance with the telephone book and the card file. For example, when the telephone book is called in order to perform facsimile transmission, only a customer registered by a "facsimile number" can be displayed while a customer registered by a telephone number is highlighted, thereby alarming a user that the telephone number cannot be used. Furthermore, an edit document processed by a wordprocessor can be directly transmitted by a facsimile by performing automatic calling utilizing the telephone book or card file.

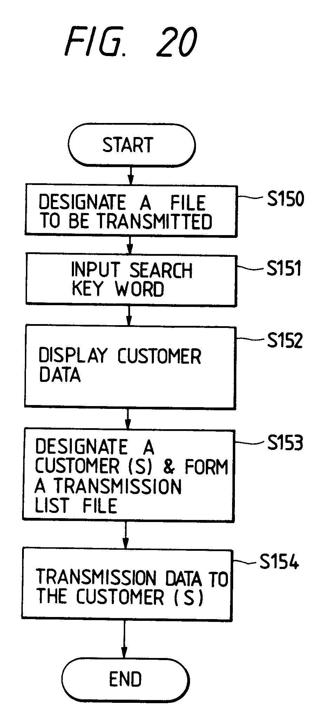

Fig. 20 is a flow chart for explaining a transmission operation performed by a facsimile function utilizing the above data base.

When a FAX transmission program is activated, a file to be transmitted is designated (S151). A document to be transmitted is stored in the file to be transmitted, thereby forming a transmission data file.

A search key word for the above telephone book file as a data base is input (S152). For example, this search key word can be input by "□□□□" as shown in Fig. 13.

The telephone book file is searched by the search key word to call and display corresponding customer data on the CRT display 3 as shown in Fig. 14 (S153).

Upon selection by an operator, a customer to which data is to be actually transmitted is designated from the customer data displayed on the CRT display 3, and a FAX transmission list file is formed (S154). In this case, the operator can select a plurality of customers.

On the basis of the FAX transmission list file, the contents of the transmission data file are transmitted to the designated customer (S155).

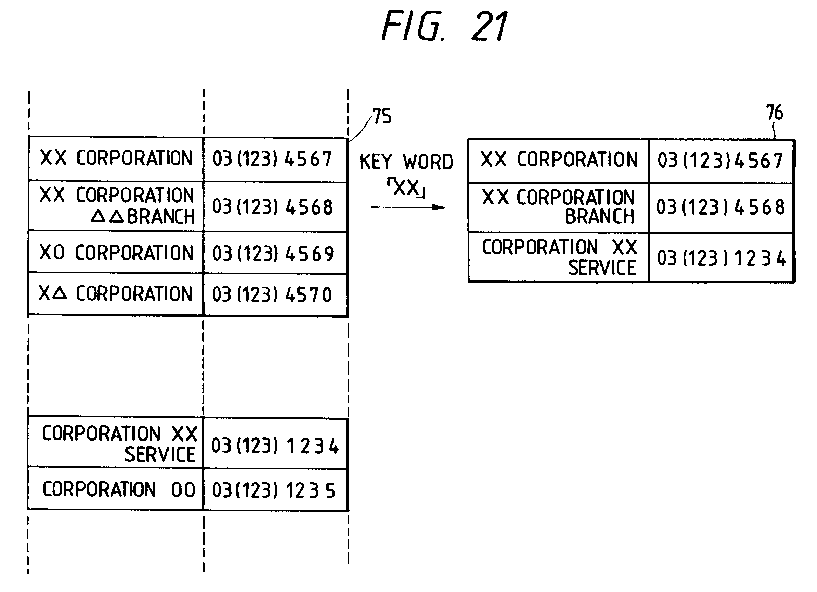

Fig. 21 is a schematic view for explaining a relationship between the contents of a telephone book file 155, the search key word, and a FAX transmission list file 156.

The telephone cook file 155 stores, in addition to a large number of customer data, customer data of a xx corporation and its associated companies such as "xx corporation", "xx corporation ΔΔ branch office", and "corporation xx service". By inputting "xx" as the search key word, only customer data of the "xx corporation and its associated companies are searched from a large number of customer data and stored in the FAX transmission list file 156. If necessary, the contents of the FAX transmission data file 156 are deleted or added to select only data to be transmitted.

By selecting a suitable search key word as described above, necessary customer data can be easily searched.

Therefore, since multi-address communication can be very easily performed by using customer data in the telephone book file, a registration table for multi-address communication need not be additionally provided to solve a problem of a cumbersome operation.

In recent years, a card is often printed such that its upper surface is printed in Japanese while its lower surface is printed in English. Therefore, two image scanners for upper and lower surfaces can be connected to perform image reading of both the surfaces at the same time to execute character recognition of both the surfaces, thereby forming both the surfaces into card data bases. At this time, if pronunciations of English words are converted into kanas, data indicating how to read a company name and a personal name written in Japanese on the upper surface can be automatically set, thereby reducing a load on a user. In addition, especially when a map is printed on the lower surface instead of an English card, card file image registration effectively functions.

In the above embodiment, only a card has been described as an object to be processed. However, a document of a fixed form having definite contents such as a postcard for invitation can be subjected to image reading, character recognition, and data base formation.

In the above embodiment, card image registration can be performed in the "card file". However, processing can be performed such that a card image is corrected by an image editor program before registration, a simple map or the like is added, and then image registration is executed. In this case, the image editor program is stored in the auxiliary storage.

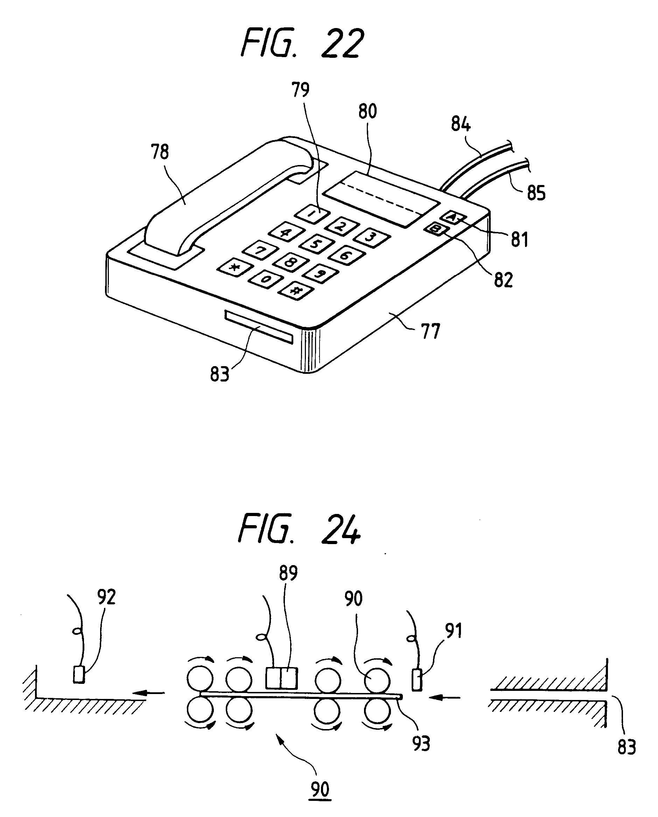

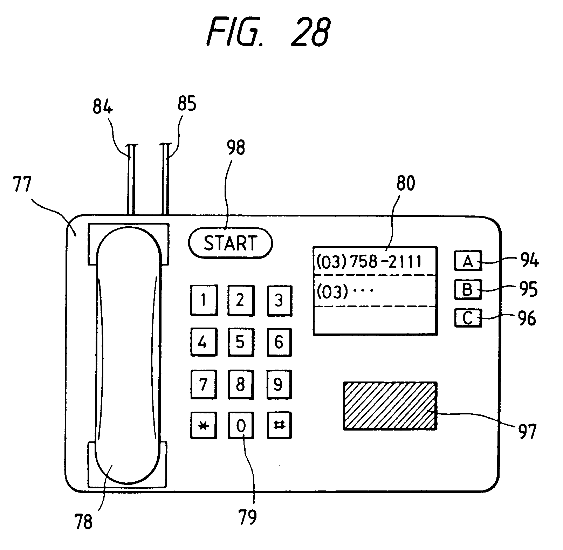

In the above embodiment, the present invention has been described with reference to the information processing apparatus having a plurality of functions such as a personal computer function, a telephone function, a facsimile function, and a wordprocessor function. As a simplest application form of the present invention, however, telephone sets as shown in Figs. 22 and 28 can be made.

Referring to Fig. 22, a telephone set 77 includes a handset 78, push buttons 79, and a liquid crystal display 80 for displaying a phone number and a time. These parts are arranged similarly to those of a conventional telephone set.

Display buttons 81 and 82 are located at the side of the liquid crystal display 80. The display buttons 81 and 82 are for selecting a phone number displayed on the liquid crystal display 80. That is, this embodiment optically reads a phone number of a card, recognizes it, and uses it for calling. However, a plurality of phone numbers of, e.g., a home, a main office, and a branch office are often described on a card. Therefore, two of the phone numbers are read, recognized, and displayed on the display 80, and one of the two numbers is selected by the display buttons 81 and 82.

The telephone set 77 also has a card inlet (to be referred to as a slot hereinafter) 83. The slot 83 is for inserting a card whose phone number is to be read and has a mechanism for transporting and optically reading a card.

The telephone set 77 has, at its rear portion, a telephone line 84 for communication and a power source cable 85 for supplying power to the telephone set.

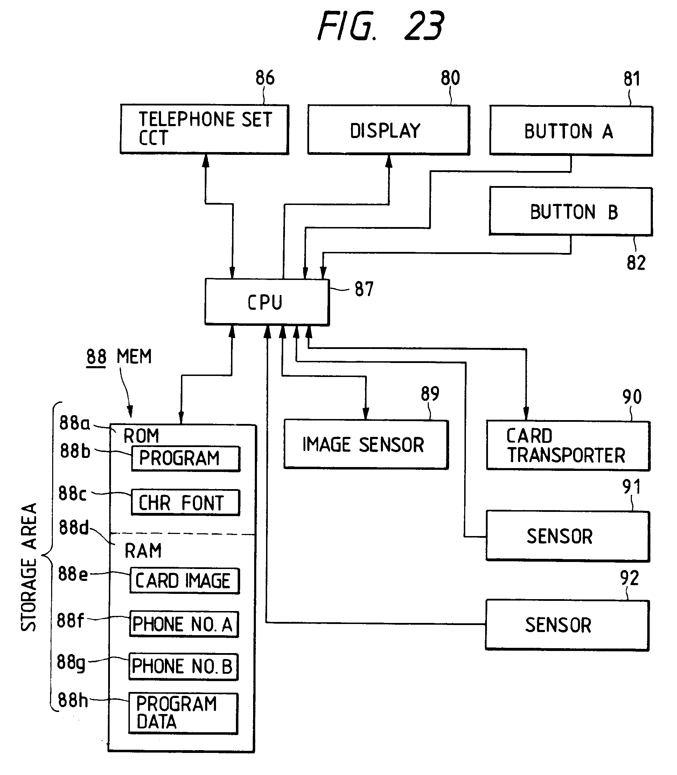

Fig. 23 shows a control system incorporated in the telephone set shown in Fig. 22.

Referring to Fig. 23, a telephone set circuit 86 includes a voice signal amplifying section for the handset 78, an input circuit for the push buttons 79, a line controller, a power source circuit, and the like. An arrangement of the telephone set circuit 86 is similar to that of a conventional circuit. Note that the telephone set circuit 86 incorporates, in addition to the above circuits, a known dialing circuit for sending a dial signal corresponding to input phone number data onto a line.

A central processing unit (to be referred as a CPU hereinafter) 87 for controlling the entire apparatus is connected to a control memory 88.

The memory 88 is divided into two parts, a ROM 88a and a RAM 88d. The ROM 88a stores a control program 88b and a display character font 88c. The RAM 88d includes a storage area 88e for developing and storing a dot image of a card, storage areas 88f and 88g for recording a phone number, and a storage area 88h for storing data for programs.

The CPU 87 is also connected to the following members to be controlled besides the memory 88.

That is, members 89 to 92 are for reading a phone number of a card. An image sensor 89 is constituted by a CCD line sensor or the like. A card transporter 90 accomodates a card into the apparatus or delivers it therefrom. A sensor 91 detects whether a card is inserted in the slot. A sensor 92 detects whether accomodation of a card into the apparatus is completed. These circuits and mechansims are arranged around the slot 83 as will be described later.

The liquid crystal display 80 for displaying a phone number has a two-line width and is connected via a known display controller or the like (not shown).

The display buttons 81 and 82 are for selecting a first or second one of two phone numbers displayed on two display lines of the display 80, thereby performing automatic calling.

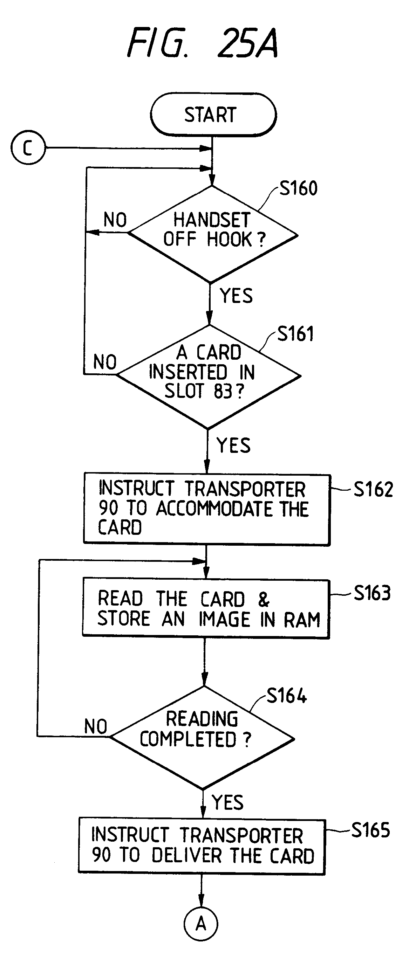

Fig. 24 shows an arrangement of the image sensor 89, the card transporter 90, and the like inside the slot 83 of the telephone set 77.

When a card 93 is inserted from the slot 83 by an operator, the sensor 91 detects the leading edge of the card 93, and driving of eight transport rollers 90a (driven by a motor or the like (not shown) of the card transporter 90) constituting the card transporter 90 is started. The card 93 is accommodated to the left of Fig. 24 at a constant speed, while an image of the card 93 is read by the image sensor 89 located at a central portion of the rollers 90a and stored in the memory 88.

When the card 93 is accomodated to a certain degree, the sensor 92 detects the leading edge of the card 93, and reverse rotation of the transport rollers 90a is started. Finally, the card 93 is delivered from the slot 83, and a read operation is completed. Note that the sensors 91 and 92 are constituted by reflecting photosensors or the like.

An operation of the above arrangement will be described below with reference to flowcharts in Figs. 25A to 25C. Procedures shown in Figs. 25A to 25C are stored in the ROM 88a of the memory 88 as programs of the CPU 87 and started when the telephone set 77 is connected to the power source cable 85 and power supply to the apparatus is started.

When power supply to the apparatus is started, the CPU 87 checks in step S160 of Fig. 25A whether the handset 78 is off-hooked. If the hand-set is not off-hooked, the flow loops and waits.

If the hand-set 78 is off-hooked, the flow advances to step S161, and whether a card is inserted in the slot 83 is checked by detecting a change in ouput signal from the sensor 91. If the card 93 is not inserted, the flow returns to step S160 and loops. If the card is inserted, the flow advances to step S162, and the transporter 90 is instructed to accomodate the card.

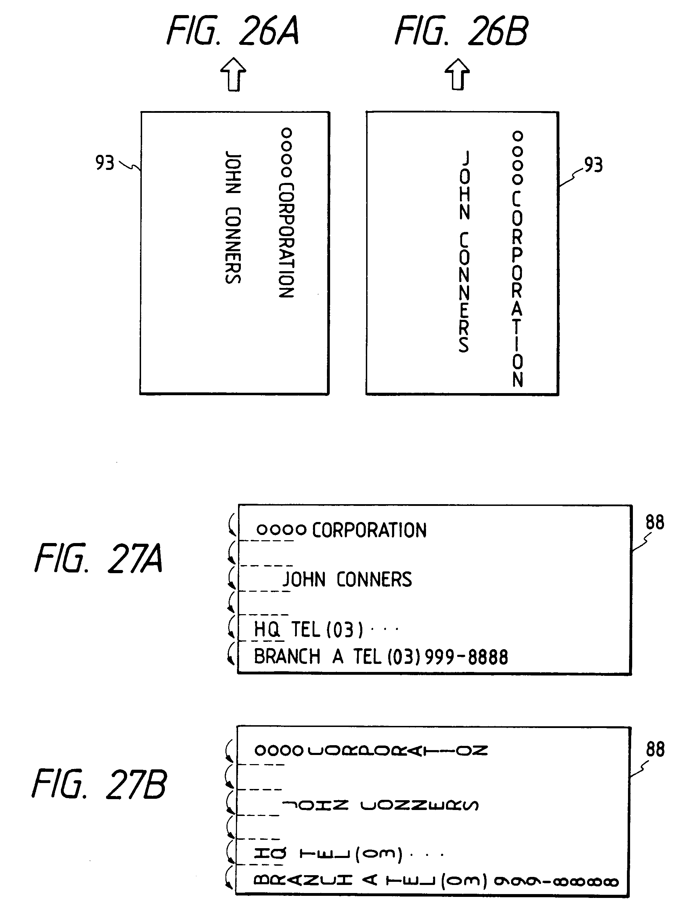

Note that an operator inserts the card in the slot 83 so that a surface on which a phone number is described or printed faces the image sensor 89. At this time, as indicated by arrows shown in Figs. 26A and 26B, the card is inserted in the slot 83 such that the head of a line of the card is set toward a predetermined direction) in this case, coincident with an insertion direction) regardless of whether the card is laterally written (Fig. 26A) or vertically written (Fig. 26B).

When the card 93 is inserted in the slot 83, the transport rollers 90a start rotating at a constant speed in step S163, thereby accomodating the card 93. The image sensor 89 reads a printed image on the card with predetermined resolution, and read binary data is developed and stored in the card image storage area 88e on the RAM 88d of the memory 88. This operation is continuously executed until the sensor 92 detects the leading edge of the card 93 in step S164.

When image reading of the card is completed, the flow advances to step 165, and the card transporter 90 is instructed to deliver the card. The transport rollers 90a start rotating in the reverse direction to deliver the card 93 from the slot 83.

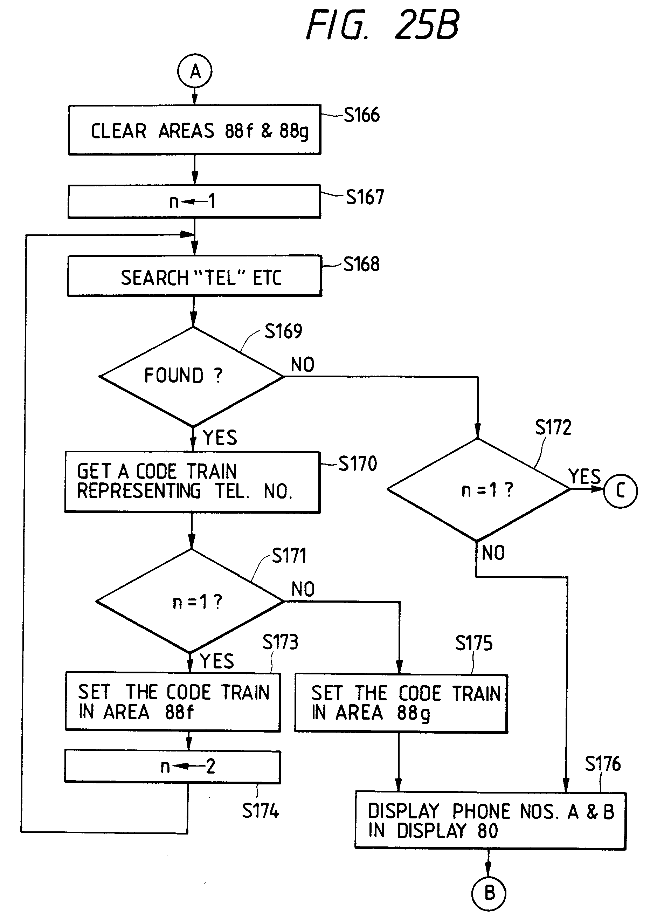

In step S166 of Fig. 25B, the storage area 88f for a phone No. A and the storage area 88g for a phone No. B of the RAM 88d are cleared. In step 167, "1" is set in a counter variable "n". The counter variable "n" is for reading up to two phone numbers from the same card and takes two values "1" and "2" representing the number of reading times of a phone number.

In step S168, data in the storage area 88e for image data is searched in units of lines. In this case, as shown in Figs. 27A and 27B, a direction along which characters continue corresponding to the longitudinal direction of the card 93 is considered as a direction of "line" regardless of whether the card is laterally or vertically written. In a direction indicated by reference symbol Sr, a line including characters such as "telephone", "TEL", vertically written "telephone" or a mark representing a telephone set is searched by a known pattern matching method of character recognition (OCR). Note that if n = 2 in step S168, i.e., if searching is to be performed for the second time, lines outside those searched for the first time are searched.

If a line including characters such as "telephone" or a mark is found in step S168, the flow advances from step S169 to S170. If a corresponding line is not found, the flow advances to step S172. In step S172, an alphanumeric image following "telephone" or a kanji/numeral image following vertically written "telephone" is analyzed by the pattern matching method of OCR, thereby obtaining a code train (e.g., an ASCII code) representing a phone number. The pattern matching method of OCR is well known and a detailed described thereof will be omitted. The OCR processing may be performed by the CPU 87 or another recognition control system.

In step S171, whether the counter variable "n" satisfies n = 1, i.e., whether searching is performed for the first time is checked. If searching is performed for the first time, the code train obtained in step S170 is stored in the storage area 88f of the RAM 88d, and n = 2 is set as the counter variable "n" in step S174. The flow then returns to step S168 to start an operation for obtaining a second phone number.

If the counter variable "n" does not satisfy n = 1 in step S171, the flow advances to step S175, and the code train obtained in step S170 is stored in the storage area 88g of the RAM 88d.

In step S176, the phone number data in the storage areas 88f and 88g are displayed on the display 80 by using the data stored in the character font storage area 88c of the ROM 88a.

If characters such as "telephone" are not found in step S169, the flow advances to step S172. If n = 1, i.e., if characters are not found by first searching, the flow returns to the start of the program and waits until another card is inserted in the slot 83. If n = 2, i.e., if characters are not found by second searching, the phone number is displayed on the display 80 in step S176. At this time, the storage area 88g is cleared.

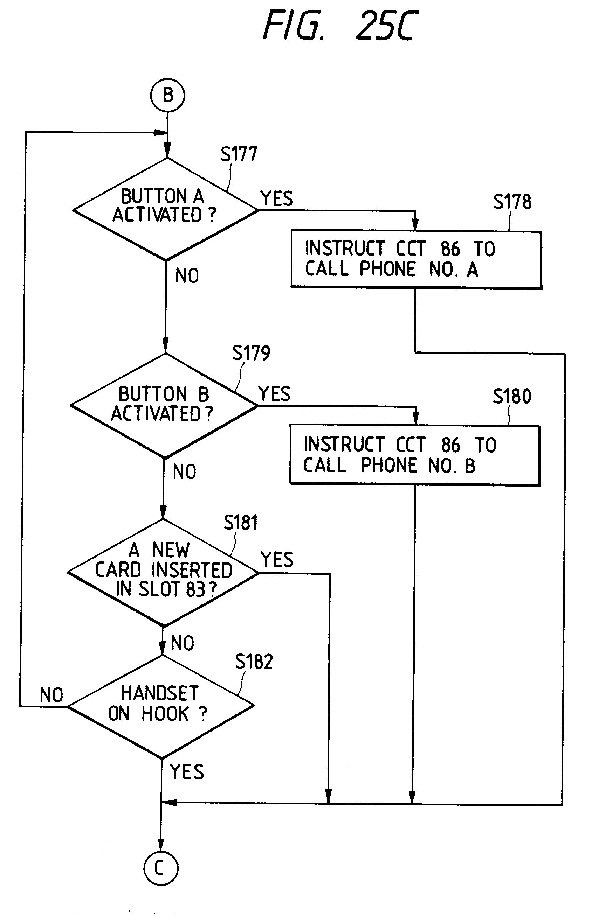

The flow then advances to step S177 in Fig. 25(c). If an operator activates the display button 81, the telephone set circuit 86 is instructed to perform calling in accordance with the phone number stored in the storage area 88f, and the flow returns to the start of the program, thereby ending the processing. The dialing circuit of the telephone set circuit 86 transmits a dial signal corresponding to the input phone number represented by a character code such as an ASCII code or binary data to the telephone line.

If it is determined that the display button 81 is not activated, the flow advances to step S179. If the display button 82 is activated, the telephone set circuit 86 is instructed to perform calling by using the phone number data stored in the storage area 88g in step S180, and the flow returns to the start of the program, thereby ending the processing.

If a trunk code of the telephone set 77 stored in a part of the memory 88 coincides with a trunk code of a customer, phone number data without the trunk code is supplied to the dialing circuit of the telephone set circuit 86, and dial processing is performed on the basis of this data.

If it is determined in step S179 that the display button B 82 is not activated, the flow advances to step S181, and whether the new card 93 is inserted in the slot 83 is checked. If the card 93 is inserted, the flow returns to the start of the program to execute the reading processing for the card 93 again.

If the card 93 is not inserted, the flow advances to step S182, and whether the handset 78 is returned to an ON hook state is checked. If the handset 78 is not returned to the ON hook state, the flow returns to step S177 to repeat determinations in steps S177, S179, S181, and S182. If it is determined that the handset 78 is returned, the flow returns to the start of the program and waits.

According to the above telephone set, character data following characters such as "telephone" is optically read, recognized, and used to perform calling. Therefore, unlike in a conventional apparatus, even if phone number data is not described nor printed on a predetermined position by a special recording system such as a bar code, phone number data can be read from any type of a card, and calling can be automatically performed on the basis of the read data, thereby simplifying a calling operation and preventing an operational error. In particular, since a phone number can be read and recognized regardless of whether it is laterally or vertically written, the present invention has high versatility.

In addition, a plurality of phone numbers of a card can be read and recognized, and a desired one of the phone numbers can be selected by a simple button operation. Therefore, phone number information described on a card can be utilized substantially similarly to a case of manual calling.

Still another embodiment in which the present invention is applied to a telephone set will be described below. This embodiment is a telephone set for reading and recognizing a phone number on a document or printed matter not a card but various types of leaflets or pamphlets and using it to perform calling.

A difference between telephone sets shown in Figs. 22 and 28 is that a display area of a display 80 has a size of three lines and therefore can display three phone numbers and three display buttons 94 to 96 are provided to select one of three phone numbers accordingly.

The apparatus shown in Fig. 28 has an image sensor 97 on the upper surface of the apparatus as a reading mechanism. The image sensor 97 is constituted by a two-dimensional CCD sensor or the like and arranged to read image data on a portion corresponding to a hatched area shown in Fig. 28 of a document or printed matter placed to face downward on the image sensor 97. A read timing of the image sensor 97 is determined by activation of a read start button 98.

Push buttons 79 and the display buttons 94 to 96 are embedded in the apparatus such that their upper end faces are set lower than the surface of the apparatus. Therefore, when a user sets a document or printed matter on the image sensor 97, erroneous activation of buttons by the user can be prevented.

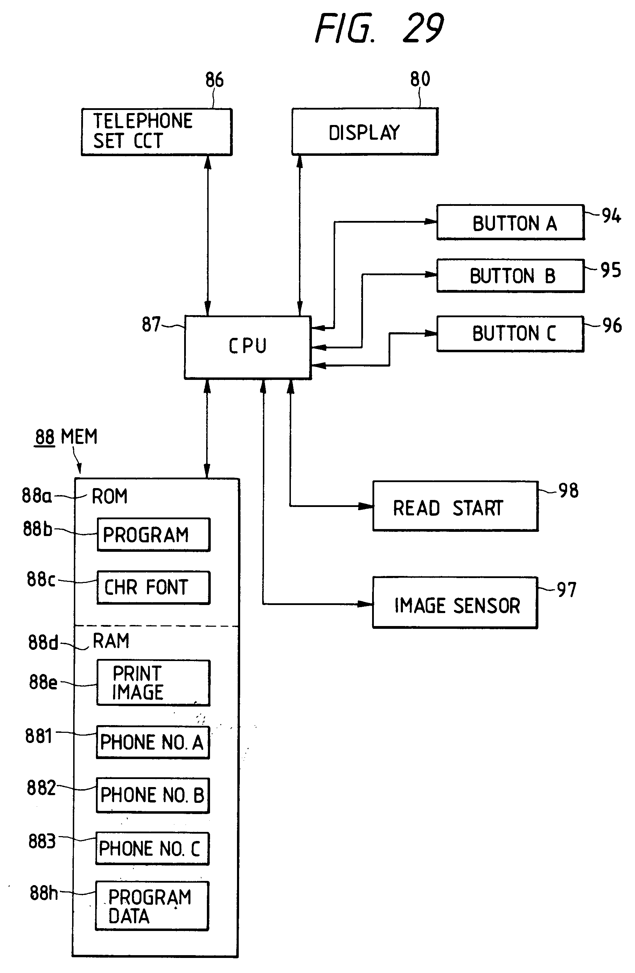

Fig. 29 shows an arrangement of a control system of the apparatus shown in Fig. 28. The circuit shown in Fig. 29 has substantially the same arrangement as that of the circuit shown in Fig. 23 except that the image sensor 97 is of a fixed type; three display buttons 94 to 96 are used, and three data areas 881 to 883 for a phone number are formed in a RAM 88d accordingly; and the image sensor 97 of an original fixed type does not transport an original unlike in the above embodiment but reads image data in the two-dimensional read area and is constituted by an optical system, a two-dimensional image sensor, and the like.

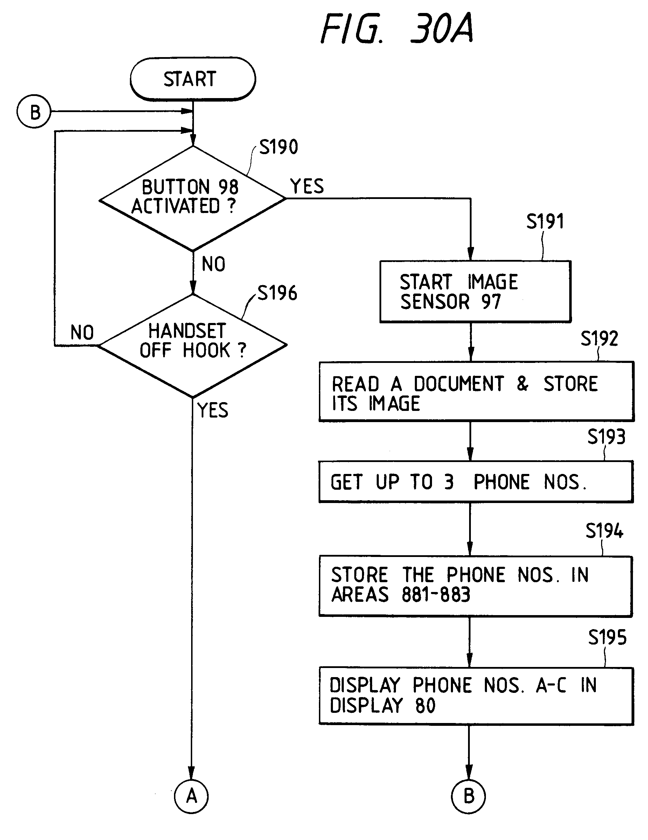

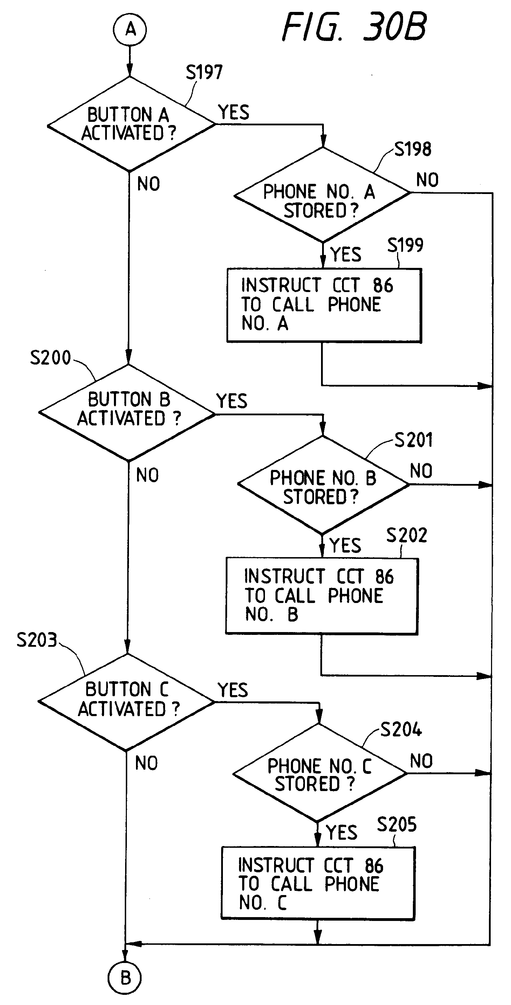

Operations of the above arrangement will be described below with reference to flowcharts shown in Figs. 30A and 30B. Note that this program is started when a power source is connected to the telephone set 77.

In step S190 of Fig. 30A, whether the read start button 98 is activated is checked. If the read start button 98 is activated, a read/analysis routine of an original such as a document or printed matter is started from step S191. Note that an operator places the original on the image sensor 97 such that a line direction of characters coincides with the longitudinal direction (lateral direction in Fig. 28) of the image sensor 97 and activates the read start button 98 at a desired timing.

In step S191, the image sensor 97 is started. In step S192, an image of the original placed on the image sensor 97 is read by the image sensor 97 and developed and stored as binary data in a printed image area 88e of the RAM 88d of the memory 88.

In step S193, the storage area 88e is searched and analyzed in units of lines by a pattern matching method of character recognition (OCR) as in the above embodiment, thereby obtaining a maximum of three phone numbers. The processing in step S193 will be described in detail later.

In step S194, the obtained phone number data are stored in the phone number storage areas 881 to 883 of the RAM 88d. If the number of the obtained phone numbers is less than three in step S193, phone Nos. A, B, and C are cleared accordingly.

In step S195, the areas 881 to 883 of the RAM 88d are displayed on the display 80, and the flow returns to the start of the program and waits until the user activates the display buttons 94 to 96. This state is similar to that in the above embodiment except that three phone numbers are displayed on the display 80.

If it is determined in step S190 that the read start button 98 is not activated, the flow advances to step S196. If the handset 78 is not off-hooked in step S196, the flow loops and waits for another instruction from the user.

If it is determined in step S196 that the handset 78 is off-hooked, the flow advances to step S197 in Fig. 30B.

Step S197, S200, or S203 is for checking activation of a corresponding one of the display buttons 94 to 96. If any of the display buttons 94 to 96 is activated, the flow advances to a corresponding one of steps S198, S201, and S204.

In each of steps S198, S201, and S204, whether a phone number is stored in one of the storage areas 881 to 883 corresponding to the display buttons 94 to 96, respectively. If a phone number is not stored, the flow returns to step S190 in Fig. 30A.

If a phone number is stored in any of steps S198, S201, and S204, the flow advances to a corresponding one of steps S199, S202, and S205, and phone number data stored in a corresponding one of the ares 881 to 883 is supplied to the telephone set circuit 86, thereby performing calling as described above. As in the above embodiment, if a trunk code of the telephone set coincides with that of a customer, a phone number without the trunk code is used.

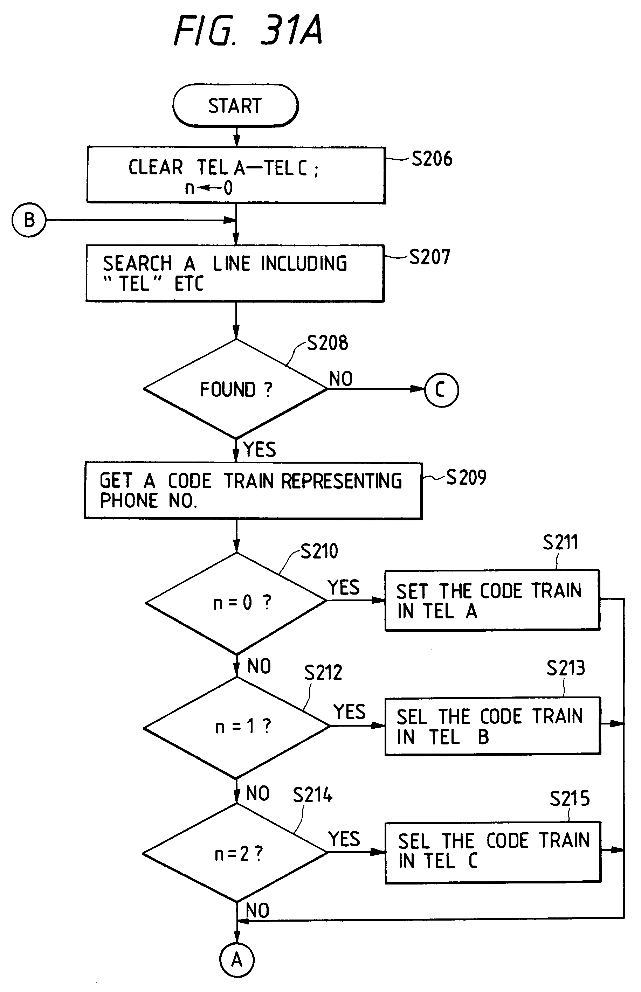

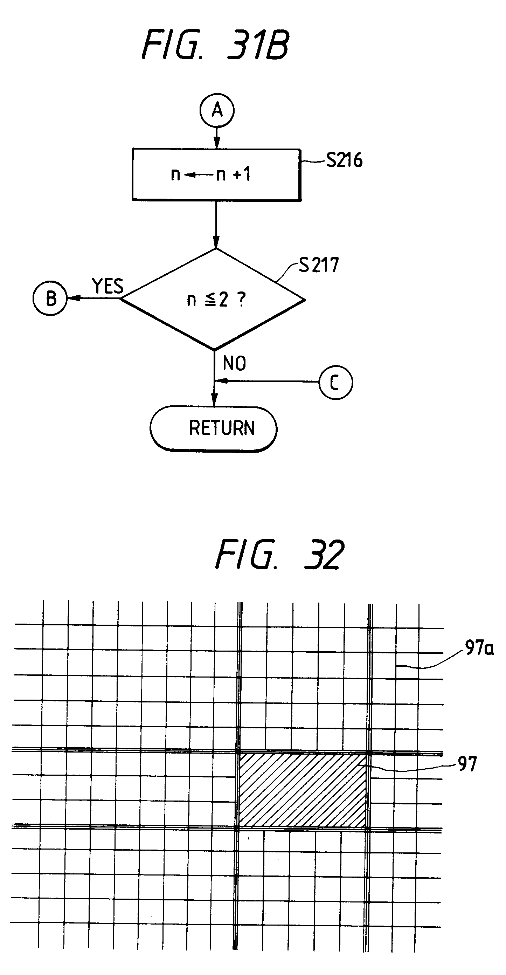

In this manner, calling can be performed for a customer by using phone number data read from any type of a document or printed matter by the image sensor 97 and subjected to character recognition. Figs. 31A and 31B show in detail the read processing in step S193 of Fig. 30A.

In step S206, arrays TELA, TELB, and TELC set in a work area of a memory for temporarily registering a phone number are cleared, and "0" is set in a counter.

In step S207, binary image data in the storage area 88e is searched in units of lines by a pattern matching method of OCR to find a line including characters such as "telephone", "TEL", vertically written "telephone" or a mark representing a telephone set. As in the case shown in Fig. 27, a search direction coincides with an arranging direction of characters of the original. In addition, the counter variable "n" is reset as described above. In this case, however, the counter variable "n" is controlled to extract three phone numbers.

If n = 1 is determined in step S207, i.e., if searching is to be performed for the second time, lines outside those searched when n = 0, i.e., upon first searching are searched. If n = 2, i.e., upon third searching, lines outside those searched when n = 0 and n = 1, i.e., upon first and second searchings are searched. If a line including characters such as "telephone" are found in step S207, the flow advances from step S208 to step S209. If a corresponding line is not found, this subroutine returns to the main routine and ends.

In step S209, as in the above embodiment, an alphanumeric image following "telephone" or the like or a kanji/numeral image following vertically written "telephone" is analyzed by the pattern matching method of OCR, thereby obtaining a code train corresponding to the phone number.

In step S210, whether n = 0 is satisfied, i.e., whether searching is to be performed for the first time is checked. If searching is to be performed for the first time, the code train obtained in step S2O9 is set in the array TELA in step S211. Similarly, the code train is set in the array TELB in steps S212 and S213 if n = 1, and the code train is set in the array TELC in steps S214 and S215 if n = 2.

After the code train is set, the flow advances to step S216 in Fig. 31B, and the counter n is counter up. If it is determined in step S217 that the counter n is two or less, the flow returns to step S121, and searching of a phone number is executed again. If the counter n is larger than two (i.e., three phone numbers are already read), the processing is ended, and the flow returns to the routine shown in Fig. 30A. Thereafter, data of the arrays TELA, TELB, and TELC are transferred to the storage areas 881 to 883, respectively.

In this manner, up to three phone number data can be read and recognized.

In the above embodiment, an arranging direction of lines of an original must be aligned with the longitudinal direction of the image sensor 97. In order to easily perform this positioning, a matrix pattern 97a as shown in Fig. 32 may be printed or marked on the upper surface of the telephone set 77. By aligning a corner or side of an original with the matrix pattern 97a, an operator can set a printed matter on the upper surface of the image sensor 97 without a skew.

The present invention can be applied not only to a telephone set but also to a facsimile apparatus.

## Claims

1. An information processing apparatus adapted for connection to a communication line (11), comprising reading means (8, 89) for reading image information recorded on a recording medium and recognising means (1, 2, 8) for recognising the image information read by said reading means, characterised by
storage means (6, 88) for storing the image information recognised by said recognizing means;
storage control means (1, 2; 87, 88) for controlling said storage means to store the recognised image information;
searching means (1, 2; 87, 88) for searching the recognised image information stored in said storage means;
display control means (1, 87) for controlling a display device (3, 80) to display the recognised image information searched by said searching means;
selection means (4; 81, 82) for selecting a desired image from the recognised image information displayed on the display device; and
control means (1, 87) adapted for performing communication processing, via said communication line, on the basis of the recognised image information selected by said selection means.

2. An apparatus as claimed in claim 1, characterised by display means for displaying the image information read by said reading means and the character data recognised by said recognising means.

3. An apparatus as claimed in claim 1 or 2, characterised in that the character data recognised by said recognising means is stored in said storage means in accordance with a type of the character data.

4. An apparatus as claimed in claim 1, 2 or 3, characterised in that said display means displays the character data registered in said storage means in accordance with a type of the character data; means being provided for correcting and changing the character data displayed on said display means.

5. An apparatus as claimed in any one of claims 1 to 4, characterised in that said control means performs control of making a phone call on the basis of the phone number searched by said searching means.

6. An apparatus as claimed in any one of claims 1 to 5, characterised in that said control means performs control of transmitting the document to be transmitted stored in said storage means on the basis of the phone number searched by said searching means.

7. An apparatus as claimed in any one of claims 1 to 6, characterised in that said storage means, selecting means, and control means are adapted for respectively storing, selecting and outputting a plurality of pieces of phone number information read by said reading means.

8. An apparatus as claimed in any one of claims 1 to 7, characterised in that said reading means is located on an upper surface of a main body of said information processing apparatus.

9. An apparatus as claimed in any one of claims 2 to 8, characterised in that said display means comprises a liquid crystal display device.

## Patentansprüche

1. Informationsverarbeitungseinrichtung zum Anschließen an eine Datenübertragungsleitung (11), mit einer Lesevorrichtung (8, 89) zum Lesen von auf einem Aufzeichnungsmedium gespeicherten Bildinformationen und einer Erkennungsvorrichtung (1, 2, 8) zum Erkennen der mittels der Lesevorrichtung gelesenen Bildinformationen, **gekennzeichnet durch**
eine Speichervorrichtung (6, 88) zum Speichern der mittels der Erkennungsvorrichtung erkannten Bildinformationen;
eine Speicher-Steuervorrichtung (1, 2; 87, 88) zum Steuern der Speichervorrichtung, um die erkannten Bildinformationen zu speichern;
eine Suchvorrichtung (1, 2; 87, 88) zum Suchen der in der Speichervorrichtung gespeicherten erkannten Bildinformationen;
eine Anzeige-Steuervorrichtung (1, 87) zum Steuern einer Anzeigeeinrichtung (3, 80), um die mittels der Suchvorrichtung gesuchten erkannten Bildinformationen anzuzeigen;
eine Auswahlvorrichtung (4: 81, 82) zum Auswählen eines gewünschten Bilds aus den mittels der Anzeigeeinrichtung angezeigten erkannten Bildinformationen; und
eine Steuervorrichtung (1, 87) zum Durchführen einer Datenübertragung über die Datenübertragungsleitung auf Grundlage der mittels der Auswahlvorrichtung ausgewählten erkannten Bildinformationen.

2. Einrichtung nach Anspruch 1, **gekennzeichnet durch** eine Anzeigevorrichtung zum Anzeigen der mittels der Lesevorrichtung gelesenen Bildinformationen und der mittels der Erkennungsvorrichtung erkannten Zeichendaten.

3. Einrichtung nach Anspruch 1 oder 2, **dadurch gekenn****zeichnet, daß** die mittels der Erkennungsvorrichtung erkannten Zeichendaten entsprechend einem Zeichendatentyp in der Speichervorrichtung gespeichert werden.

4. Einrichtung nach Anspruch 1, 2 oder 3, **dadurch gekenn****zeichnet, daß** die Anzeigevorrichtung die entsprechend einem Zeichendatentyp in der Speichervorrichtung registrierten Zeichendaten anzeigt, und daß Vorrichtungen zum Korrigieren und Ändern der mittels der Anzeigeeinrichtung angezeigten Daten vorhanden sind.

5. Einrichtung nach einem der Ansprüche 1 bis 4, **dadurch** **gekennzeichnet, daß** die Steuervorrichtung eine Telefonverbindung auf Grundlage einer mittels der Suchvorrichtung gesuchten Telefonnummer steuert.

6. Einrichtung nach einem der Ansprüche 1 bis 5, **dadurch** **gekennzeichnet, daß** die Steuervorrichtung eine Übertragung eines zu übertragenden, in der Speichervorrichtung gespeicherten Dokuments auf Grundlage der mittels der Suchvorrichtung gesuchten Telefonnummer steuert.

7. Einrichtung nach einem der Ansprüche 1 bis 6, **dadurch** **gekennzeichnet, daß** anhand der Speichervorrichtung, der Auswahlvorrichtung und der Steuervorrichtung eine Vielzahl von mittels der Lesevorrichtung gelesenen Telefonnummerin-formationsteilen speicher-, auszuwähl- und ausgebbar sind.

8. Einrichtung nach einem der Ansprüche 1 bis 7, **dadurch** **gekennzeichnet, daß** die Lesevorrichtung auf einer oberen Oberfläche eines Gehäuses der Informationsverarbeitungseinrichtung angeordnet ist.

9. Einrichtung nach einem der Ansprüche 2 bis 8, **dadurch** **gekennzeichnet, daß** die Anzeigevorrichtung eine Flüssigkristallanzeigeeinrichtung enthält.

## Revendications

1. Un appareil de traitement d'information conçu pour être connecté à une ligne de télécommunication (11), comprenant des moyens de lecture (8, 89) pour lire une information d'image enregistrée sur un support d'information et des moyens de reconnaissance (1, 2, 8) pour reconnaître l'information d'image qui est lue par les moyens de lecture, caractérisé par
des moyens d'enregistrement (6, 88) pour enregistrer l'information d'image qui est reconnue par les moyens de reconnaissance ;
des moyens de commande d'enregistrement (1, 2 ; 87, 88) pour commander les moyens d'enregistrement de façon à enregistrer l'information d'image qui est reconnue ;
des moyens de recherche (1, 2 ; 87, 88) pour rechercher l'information d'image reconnue qui est enregistrée dans les moyens d'enregistrement ;
des moyens de commande de visualisation (1, 87) pour commander un dispositif de visualisation (3, 80) pour visualiser l'information d'image reconnue qui est recherchée par les moyens de recherche ;
des moyens de sélection (4 ; 81, 82) pour sélectionner une image désirée parmi l'information d'image reconnue qui est visualisée sur le dispositif de visualisation ; et
des moyens de commande (1, 87) conçus pour accomplir un traitement de télécommunication, par l'intermédiaire de la ligne de télécommunication, sur la base de l'information d'image reconnue qui est sélectionnée par les moyens de sélection.

2. Un appareil selon la revendication 1, caractérisé par des moyens de visualisation pour visualiser l'information d'image qui est lue par les moyens de lecture et les données de caractères qui sont reconnues par les moyens de reconnaissance.

3. Un appareil selon la revendication 1 ou 2, caractérisé en ce que les données de caractères qui sont reconnues par les moyens de reconnaissance sont enregistrées dans les moyens d'enregistrement conformément à un type des données de caractères.

4. Un appareil selon la revendication 1, 2 ou 3, caractérisé en ce que les moyens de visualisation visualisent les données de caractères enregistrées dans les moyens d'enregistrement conformément à un type des données de caractères ; des moyens étant incorporés pour corriger et changer les données de caractères qui sont visualisées sur les moyens de visualisation.

5. Un appareil selon l'une quelconque des revendications 1 à 4, caractérisé en ce que les moyens de commande accomplissent la commande de l'établissement d'un appel téléphonique sur la base du numéro de téléphone qui est recherché par les moyens de recherche.

6. Un appareil selon l'une quelconque des revendications 1 à 5, caractérisé en ce que les moyens de commande effectuent la commande de l'émission du document à émettre, qui est enregistré dans les moyens d'enregistrement, sur la base du numéro de téléphone qui est recherché par les moyens de recherche.

7. Un appareil selon l'une quelconque des revendications 1 à 6, caractérisé en ce que les moyens d'enregistrement, les moyens de sélection et les moyens de commande sont respectivement conçus pour enregistrer, sélectionner et émettre un ensemble d'éléments d'information consistant en numéros de téléphone qui sont lus par les moyens de lecture.

8. Un appareil selon l'une quelconque des revendications 1 à 7, caractérisé en ce que les moyens de lecture se trouvent sur une surface supérieure d'un coffret principal de l'appareil de traitement d'information.

9. Un appareil selon l'une quelconque des revendications 2 à 8, caractérisé en ce que les moyens de visualisation comprennent un dispositif de visualisation à cristal liquide.
